# EUROPEAN PATENT APPLICATION

(11) **EP 4 835 027 A1**
(43) Date of publication of application: **04.11.2026**
(21) Application number: 24913048.5
(22) Date of filing: 26.12.2024
(51) Int. Cl.: C09J 7/30, C09J 7/24, C09J 11/04, C09J 133/00, C09J 201/00, E04G 23/02

(54) **ADHESIVE TAPE AND METHOD FOR USING ADHESIVE TAPE**

(30) Priority: 28.12.2023 JP 2023223503
(71) Applicant: Sekisui Chemical Co., Ltd., Osaka-shi, Osaka 530-8565 (JP)
(72) Inventor: MIYAMOTO, Shunichi, Hasuda-shi, Saitama 349-0198 (JP); SAKON, Takaaki, Hasuda-shi, Saitama 349-0198 (JP); KAJI, Shouji, Hasuda-shi, Saitama 349-0198 (JP)
(74) Representative: Ter Meer und Partner mbB
(86) International application number: PCT/JP2024/046261
(87) International publication number: WO 2025/143162

(57) **Abstract**

A pressure-sensitive adhesive tape for a concrete structure or a structure having a rusted part, comprising a substrate, and a pressure-sensitive adhesive layer provided on at least one side of the substrate, wherein the pressure-sensitive adhesive tape has a total light transmittance of 50% or more, and a difference between a tensile load at 2.5% elongation and a tensile load at 0.5% elongation of 1.3 N/mm or less, and the substrate has an ultraviolet transmittance at a wavelength of 340 nm of 5% or less, and a rate of change in color difference of the substrate after conducting an accelerated weather resistance test for 500 hours is 5 or less.

## Description

### Technical Field

The present invention relates to a pressure-sensitive adhesive tape, and a method for using the tape.

### Background Art

Large-scale structures such as a viaduct, a tunnel, a bridge, a steel tower, and a tank are constructed using a combination of a steel material and a concrete material in many cases. Steel and concrete materials undergo corrosion over time, resulting in rust, cracks, fissures, and the like. When such corrosion progresses, the corroded area is sometimes repaired by, for example, applying a paint, an adhesive, or the like to the surface of the structure; however, such a repair method involves complex procedures and requires a significant amount of time before the actual repair work can begin. As a result, there are problems that rust spreads further in the corroded area, or a concrete fragment falls off from the corroded area before repair work begins.

As a method for simplifying the procedures of the repair work in the corroded area, there is a known method in which a sheet is applied over the corroded area to suppress further progression of the corrosion. However, the sheet can be highly rigid, and hence sometimes fails to conform properly to the corroded area in application. Furthermore, such sheets are often opaque, which makes it difficult to visually inspect corrosion underneath, allowing corrosion to progress unnoticed, and thus, the corrosion cannot be effectively prevented in many cases. Therefore, a laminated sheet with excellent conformability and transparency has been conventionally proposed as disclosed in, for example, PTL 1, for use on a concrete structure or a structure having a rusted part.

### Citation List

### Patent Literature

PTL1: JP 2019-64260 A

### Summary of Invention

### Technical Problem

However, PTL 1 provides no discussion regarding the weather resistance of the laminated sheet, and when it is used outdoors for a long period, there is a risk that the sheet may degrade due to ultraviolet rays and the like. Therefore, this sheet is unsuitable for long-term outdoor use.

Accordingly, an object of the present invention is to provide a pressure-sensitive adhesive tape that is excellent in conformability and transparency, exhibits high weather resistance, and is resistant to degradation and discoloration even during long-term outdoor use, thereby maintaining excellent anticorrosive property and transparency.

### Solution to Problem

As a result of having conducted diligent research, the present inventors have found that the above-described problems can be solved by using the following constitutions.

Specifically, the present invention provides [1] to [20] as follows.
[1] A pressure-sensitive adhesive tape for concrete, mortar, an underwater material, or a metallic material, comprising a substrate, and a pressure-sensitive adhesive layer provided on at least one side of the substrate, the pressure-sensitive adhesive tape having a total light transmittance of 30% or more, and a difference between a tensile load at 2.5% elongation and a tensile load at 0.5% elongation of less than 2.0 N/mm, and the substrate having an ultraviolet transmittance at a wavelength of 340 nm of 5% or less, and a color difference (ΔE) after conducting an accelerated weather resistance test for 500 hours of 5 or less.
[2] The pressure-sensitive adhesive tape according to [1], wherein the pressure-sensitive adhesive tape has a tensile elongation at break of 100% or more.
[3] The pressure-sensitive adhesive tape according to [1] or [2], wherein the total light transmittance of the pressure-sensitive adhesive tape after conducting an accelerated weather resistance test in accordance with Cycle A in JIS K5600-7-7 for 500 hours is 30% or more.
[4] The pressure-sensitive adhesive tape according to any one of [1] to [3], wherein the substrate does not break and the pressure-sensitive adhesive layer has an adhesive force of 20 N/25 mm or more in a peeling test performed after conducting an accelerated weather resistance test in accordance with Cycle A in JIS K5600-7-7 for 500 hours.
[5] The pressure-sensitive adhesive tape according to any one of [1] to [4], wherein the substrate has an Elmendorf tear strength measured without introducing a slit in an Elmendorf tear method in accordance with JIS K 7128-2 (1998) of 1.7 N or more.
[6] The pressure-sensitive adhesive tape according to any one of [1] to [5], wherein when a measurement sample prepared by applying a fluorine-based topcoat paint, in accordance with JIS K5659:2018, to the substrate to a thickness of 25 µm and drying the paint at 23°C for 16 hours is subjected to a cross-cut test in accordance with JIS K5600-5-6, substantially no peeling is observed in any of grid squares.
[7] The pressure-sensitive adhesive tape according to any one of [1] to [6], wherein a dimensional change rate of the substrate after immersion in xylene for 5 minutes is 3% or less.
[8] The pressure-sensitive adhesive tape according to any one of [1] to [7], wherein a gloss retention of the substrate after conducting the accelerated weather resistance test for 500 hours is 80% or more.
[9] The pressure-sensitive adhesive tape according to any one of [1] to [8], wherein the substrate contains an acrylic resin.
[10] The pressure-sensitive adhesive tape according to any one of [1] to [9], wherein the substrate has a thickness of 20 to 300 µm.
[11] The pressure-sensitive adhesive tape according to any one of [1] to [10], wherein the pressure-sensitive adhesive layer has a thickness of 50 to 2500 µm.
[12] The pressure-sensitive adhesive tape according to any one of [1] to [11], wherein the pressure-sensitive adhesive layer is formed from a photocurable resin.
[13] The pressure-sensitive adhesive tape according to any one of [1] to [11], wherein the pressure-sensitive adhesive layer is formed from an acrylic pressure-sensitive adhesive.
[14] The pressure-sensitive adhesive tape according to any one of [1] to [13], wherein the pressure-sensitive adhesive layer has a storage elastic modulus at 23°C of 50000 to 1000000 Pa.
[15] The pressure-sensitive adhesive tape according to any one of [1] to [14], wherein the pressure-sensitive adhesive layer contains a metal having a lower potential than that of iron.
[16] The pressure-sensitive adhesive tape according to [15], wherein the metal having a lower potential than that of iron is zinc.
[17] The pressure-sensitive adhesive tape according to any one of [1] to [16], wherein the pressure-sensitive adhesive layer contains an electroconductive material other than the metal having a lower potential than that of iron.
[18] The pressure-sensitive adhesive tape according to [17], wherein the electroconductive material is a carbon nanotube.
[19] A method for using a pressure-sensitive adhesive tape, comprising attaching the pressure-sensitive adhesive tape according to any one of [1] to [18] to a surface of a concrete structure or a structure having a rusted part.
[20] The method for using a pressure-sensitive adhesive tape according to [19], comprising applying a rust progression inhibitor or a primer to a surface for attaching the pressure-sensitive adhesive tape before attaching the pressure-sensitive adhesive tape.

### Advantageous Effects of Invention

The present invention can provide a pressure-sensitive adhesive tape that is excellent in conformability and transparency, exhibits high weather resistance, and is resistant to degradation and discoloration even during long-term outdoor use, thereby maintaining excellent anticorrosive property and transparency.

### Brief Description of Drawing

[Fig. 1] Fig. 1 is a schematic view illustrating an embodiment of a pressure-sensitive adhesive tape of the present invention.
[Fig. 2] Fig. 2 is a schematic view illustrating an embodiment of the pressure-sensitive adhesive tape of the present invention.
[Fig. 3] Fig. 3 is a schematic view illustrating a method for evaluating the conformability of the pressure-sensitive adhesive tape of the present invention.
[Fig. 4] Fig. 4 is a diagram for illustrating evaluation of topcoat.

### Description of Embodiments

### [Pressure-sensitive adhesive tape]

A pressure-sensitive adhesive tape of the present invention is a pressure-sensitive adhesive tape including a substrate, and a pressure-sensitive adhesive layer provided on at least one side of the substrate. The pressure-sensitive adhesive tape will be described in more detail.

### <Difference between tensile loads>

The pressure-sensitive adhesive tape of the present invention has a difference between the tensile load at 2.5% elongation and the tensile load at 0.5% elongation (hereinafter, simply referred to as the "difference between tensile loads") of less than 2.0 N/mm. The difference between tensile loads means the tensile load per 2% elongation substantially in the elastic region. When the value of the difference between tensile loads is small, the tape conforms to the shape of an adherend (such as a step) and is more easily attached thereto. Additionally, even when the tape is attached to an adherend in a stretched state, a stress due to shrinkage or the like is unlikely to occur after the attachment, and thus the adhesive strength after the attachment is easily maintained.

When the difference between tensile loads is 2.0 N/mm or more, there is a risk that the pressure-sensitive adhesive tape may not fully exhibit its conformability, which may result in defects, such as the inability to achieve proper attachment to an adherend with a complex shape. From the viewpoint of fully exhibiting the conformability, the difference between tensile loads is preferably 1.3 N/mm or less. Besides, although not particularly limited, from the viewpoint of providing the pressure-sensitive adhesive tape with a certain degree of stiffness and workability to effectively prevent defects during attachment, the difference between tensile loads is preferably 0.1 N/mm or more, more preferably 0.2 N/mm or more, and further preferably 0.3 N/mm or more.

The difference between tensile loads is to be measured each in the MD and the TD of the pressure-sensitive adhesive tape, and the larger of the values is to be used. When it is not known whether the direction is the MD or the TD, the largest value of the differences between tensile loads may be used. The difference between tensile loads can be measured by the method described in the example. A difference between tensile loads of the substrate described below is similarly obtained.

The difference between tensile loads of the pressure-sensitive adhesive tape can be adjusted to fall within the above-described ranges by appropriately selecting the materials to be used for the substrate and a pressure-sensitive adhesive layer, the thickness of the pressure-sensitive adhesive tape, and the like.

### <Initial total light transmittance>

The pressure-sensitive adhesive tape of the present invention has a total light transmittance of 30% or more. It is noted that the total light transmittance here is measured prior to an accelerated weather resistance test described later, and is also referred to as the "initial total light transmittance."

When the initial total light transmittance is less than 30%, the transparency immediately after attaching the pressure-sensitive adhesive tape to an adherend will be insufficient, and therefore there is a risk that the surface condition of the area where the tape is adhered cannot be confirmed immediately after attaching the pressure-sensitive adhesive tape. From this point of view, the initial total light transmittance is preferably 38% or more, and more preferably 55% or more. The initial total light transmittance is preferably as high as possible, may be 100% or less, and may be practically, for example, 97% or less.

### <Total light transmittance after accelerated weather resistance test>

The pressure-sensitive adhesive tape of the present invention preferably has a total light transmittance of 30% or more after conducting an accelerated weather resistance test in accordance with Cycle A in JIS K5600-7-7 for 500 hours. When the total light transmittance is 30% or more, excellent transparency can be ensured even after the pressure-sensitive adhesive tape has been used outdoors for a long period, and the progression of corrosion in an area where the pressure-sensitive adhesive tape is adhered can be visually inspected through the tape. From the viewpoint of enhancing the visibility after long-term use, the total light transmittance is preferably 35% or more, and more preferably 50% or more. The total light transmittance is preferably as high as possible, may be 100% or less, and is practically 95% or less.

### <Tensile elongation at break>

The pressure-sensitive adhesive tape of the present invention preferably has a tensile elongation at break of 100% or more. When the tensile elongation at break of the pressure-sensitive adhesive tape is 100% or more, the pressure-sensitive adhesive tape sufficiently easily conforms to an adherend without causing a tear in adhering the pressure-sensitive adhesive tape in a stretched state, and therefore, the pressure-sensitive adhesive tape can be properly adhered to the adherend. From this viewpoint, the tensile elongation at break of the pressure-sensitive adhesive tape is more preferably 120% or more, and further preferably 130% or more.

On the other hand, the upper limit of the tensile elongation at break of the pressure-sensitive adhesive tape is not particularly limited and is preferably 700% or less and more preferably 600% or less in terms of mechanical strength and the like.

The tensile elongation at break is to be measured each in the MD and the TD of the substrate, and the smaller of the values is to be used. When it is not known whether the direction is the MD or the TD, the smallest tensile elongation at break value may be used. The tensile elongation at break can be measured by the method described in the example.

The difference between tensile loads and the tensile elongation at break of the pressure-sensitive adhesive tape can be adjusted to fall within the above-described ranges by appropriately selecting the materials to be used for the substrate and the pressure-sensitive adhesive layer, the thickness of the pressure-sensitive adhesive tape, and the like.

### <Gloss retention>

The pressure-sensitive adhesive tape of the present invention has gloss retention after conducting an accelerated weather resistance test in accordance with Cycle A in JIS K5600-7-7 for 500 hours of preferably 80% or more, more preferably 85% or more, and further preferably 90% or more. With gloss retention equal to or more than any of the lower limits, when the pressure-sensitive adhesive tape is irradiated with light over a long period as in outdoor use, the pressure-sensitive adhesive tape can be prevented from deteriorating in the adhesive force, and worsening in the appearance. A higher gloss retention is more preferable, and its upper limit is 100%.

The gloss retention of the pressure-sensitive adhesive tape after the accelerated weather resistance test can be determined in accordance with the following expression by measuring gloss B of the substrate before the accelerated weather resistance test and gloss A of the substrate after the accelerated weather resistance test. Details of the measurement method can be carried out as described in Examples below. $Gloss retention \left(%\right) = \left(gloss B/gloss A\right) \times 100$

### <Adhesive force>

It is preferable in the pressure-sensitive adhesive tape of the present invention that the substrate does not break and the pressure-sensitive adhesive layer has an adhesive force of 20 N/25 mm or more in a peeling test performed after conducting an accelerated weather resistance test in accordance with Cycle A in JIS K5600-7-7 for 500 hours.

The fact that the substrate does not break in the peeling test after the accelerated weather resistance test ensures that the pressure-sensitive adhesive tape possesses the weather resistance, and can be suitable for long-term outdoor use. Furthermore, the adhesive force of 20 N/25 mm or more guarantees a sufficient long-term adhesive force, which prevents peeling from an adherend and facilitates the maintenance of the anticorrosive property.

From the viewpoint of maintaining the high adhesive force for a long period, the adhesive force after the accelerated weather resistance test is more preferably 25 N/25 mm or more, further preferably 30 N/25 mm or more, and even more preferably 40 N/25 mm or more. The adhesive force is preferably as high as possible and is practically 200 N/25 mm or less.

The adhesive force of the pressure-sensitive adhesive tape after the accelerated weather resistance test is measured as follows.

The pressure-sensitive adhesive tape of the present invention is attached to a stainless steel plate (SUS plate) to prepare a specimen for adhesive force evaluation. In this case, the specimen for adhesive force evaluation is prepared by attaching the pressure-sensitive adhesive tape such that the SUS plate surface is brought into contact with the pressure-sensitive adhesive layer of the tape. The size of the pressure-sensitive adhesive tape is 100 mm in length and 25 mm in width. The pressure-sensitive adhesive tape is attached to the SUS plate by moving a 2-kg roller back and forth twice at a speed of 10 ± 0.5 mm/s.

The specimen for adhesive force evaluation is used for conducting the accelerated weather resistance test in accordance with Cycle A in JIS K5600-7-7. The test is conducted for 500 hours in total.

In the specimen for adhesive force evaluation after the accelerated weather resistance test, the adhesive force of the pressure-sensitive adhesive tape is measured by a peeling test. The peeling test is performed by peeling the tape for 60 mm or more with a tensile tester under an environment of 23°C and 50 RH% under conditions of a peeling angle of 90° and a rate of 300 mm/min, and an average value of loads (N) detected over that measurement interval is defined as the adhesive force. The condition of the substrate described above is also verified by the same peeling test.

### <Substrate>

### (Ultraviolet transmittance)

As the substrate constituting the pressure-sensitive adhesive tape of the present invention, one having weather resistance may be used. By using a weather-resistant substrate, the pressure-sensitive adhesive tape not only achieves excellent conformability and transparency but also exhibits excellent weather resistance, and even when exposed to light irradiation for a long period in outdoor use or the like, the pressure-sensitive adhesive tape can be resistant to degradation and discoloration, and thus, excellent anticorrosive property and transparency can be maintained.

Specifically, in the present invention, the substrate constituting the pressure-sensitive adhesive tape has an ultraviolet transmittance at a wavelength of 340 nm (hereinafter, simply referred to as the "ultraviolet transmittance") of 5% or less. When the ultraviolet transmittance exceeds 5%, the pressure-sensitive adhesive layer will degrade due to the ultraviolet, and consequently, when used outdoors for a long period, the pressure-sensitive adhesive tape may fail to maintain the anticorrosive property for a long period. From this point of view, the ultraviolet transmittance is preferably 3% or less, and more preferably 1% or less. The ultraviolet transmittance is preferably as low as possible, and may be 0% or more.

The ultraviolet transmittance can be determined by a measurement method described in Examples.

### (Color difference (ΔE))

The substrate constituting the pressure-sensitive adhesive tape of the present invention has a color difference (ΔE) after conducting the accelerated weather resistance test for 500 hours of 5 or less. When the ΔE exceeds 5, the pressure-sensitive adhesive tape may undergo discoloration when used outdoors, and the progression of corrosion or damage in a corroded or damaged area may be difficult to visually inspect through the tape. From this viewpoint, the ΔE is preferably 3 or less, and more preferably 1 or less. The ΔE is preferably as low as possible, and may be 0 or more, but practically is, for example, 0.1 or more, preferably 0.2 or more, and more preferably 0.3 or more.

The color difference (ΔE) refers to a difference between the colors of the substrate before and after the accelerated weather resistance test conducted for 500 hours.

As a method for reducing the ultraviolet transmittance or the color difference (ΔE) of the substrate, the material itself may be reduced in the ultraviolet transmittance, or provided with weather resistance. Specifically, a weather-resistant resin may be used in a resin constituting the substrate, or an ultraviolet absorber, a hindered amine light stabilizer (HALS) or the like may be incorporated into a resin constituting the substrate.

Furthermore, a weather-resistant substrate can be obtained by forming a weather-resistant film on the surface of the substrate. This weather-resistant film may be formed on at least one side of the substrate. The weather-resistant film can be formed, for example, by applying a weather-resistant coating, that is, a paint having weather resistance.

The substrate is preferably a resin film. As a resin constituting the resin film, for example, an acrylic resin, a silicone resin, a polycarbonate resin, an AES resin, an ASA resin, and a polyolefin such as polyethylene and polypropylene can be preferably used. One of these resins may be used singly, or two or more of these may be used in combination. The silicone resin is not particularly limited but may be an acrylic-silicone resin. The resin film may contain an additive such as an ultraviolet absorber, an antioxidant, or a light stabilizer. From the viewpoint of easily achieving low ultraviolet transmittance and a small color difference (ΔE), an acrylic resin is preferably contained as the resin. Therefore, an acrylic resin film is preferably used as the resin film. An acrylic resin film has a strong interatomic bonding force in an acrylic resin used as the principal component, has low ultraviolet transmittance, and ensures a small color difference (ΔE) even after long-term use.

The resin film is preferably a soft resin film, and it is more preferable to use a soft acrylic resin film in particular. The soft resin film may be a film containing a soft component such as a plasticizer. Using a soft resin film makes it easier to reduce the difference between tensile loads of the pressure-sensitive adhesive tape, resulting in enhancing the conformability of the pressure-sensitive adhesive tape. Furthermore, by using a soft acrylic resin film among various soft resin films, it is possible to achieve a film that has low ultraviolet transmittance as well as high conformability, and exhibits a small color difference (ΔE) even after long-term use.

The resin film used as the substrate may be a single-layer film or may be a multilayer film. When the resin film is a multilayer film, resin films of only the same type of resin may be laminated, or resin films of two or more types of resins may be laminated.

The substrate may contain an additive other than those mentioned above, as long as the ultraviolet transmittance and color difference remain within the specified ranges. Examples of such an additive include a colorant such as a pigment or a dye, an antistatic agent, a flame retardant, an antifungal agent, an antioxidant, a leveling agent, a flow control agent, an antifoaming agent, a dispersant, a reinforcing fiber, a metal oxide particle such as silica, alumina, or titania, an antifouling agent, a thickener, and a film strength enhancer.

### (Cross-cut test)

The substrate constituting the pressure-sensitive adhesive tape of the present invention preferably exhibits a property such that, when a cross-cut test in accordance with JIS K5600-5-6 is performed on a measurement sample prepared by applying, to the substrate, a fluorine-based topcoat paint, in accordance with JIS K5659:2018, to a thickness of 25 µm and drying the resultant at 23°C for 16 hours, no peeling occurs in any of grid squares. The pressure-sensitive adhesive tape of the present invention may be coated with a topcoat paint after being attached to an adherend. Since the substrate possesses this physical property, adhesion between the substrate and the topcoat paint is enhanced, which can make the topcoat paint difficult to peel.

### (Dimensional change rate after immersion in xylene)

The dimensional change rate of the substrate used in the pressure-sensitive adhesive tape of the present invention after immersion in xylene for 5 minutes is preferably 6% or less, more preferably 3% or less, further preferably 2% or less, and even more preferably 1.5% or less. When the dimensional change rate of the substrate is equal to or less than any of the above upper limits, solvent resistance is imparted to the tape. Accordingly, when a topcoat paint is applied to an adherend to which the pressure-sensitive adhesive tape has been attached, wrinkling of the pressure-sensitive adhesive tape after drying of the topcoat paint is prevented, making it easier to maintain a good appearance of the adherend coated with the topcoat paint.

On the other hand, the lower limit of the range of the dimensional change rate of the substrate used in the pressure-sensitive adhesive tape of the present invention after immersion in xylene for 5 minutes is not particularly limited, and is preferably 0%.

The dimensional change rate of the substrate after immersion in xylene can be measured, for example, by a method described in Examples below.

The dimensional change rate of the substrate after immersion in xylene can be adjusted to fall within the above-described range by appropriately selecting the materials used for the substrate and the like.

When a topcoat paint is applied, it is preferable that the substrate has high adhesion to the topcoat paint and a low dimensional change rate after immersion in xylene, and therefore, from this viewpoint, an acrylic resin film is preferably used.

### (Elmendorf tear strength)

In the substrate used in the pressure-sensitive adhesive tape of the present invention, the Elmendorf tear strength measured without introducing a slit in an Elmendorf tear method in accordance with JIS K 7128-2 (1998) is preferably 1.7 N or more, more preferably 3.0 N or more, further preferably 6.0 N or more, and even more preferably 12 N or more. When the Elmendorf tear strength of the substrate measured without introducing a slit is equal to or more than any of the above lower limits, excellent conformability can be easily imparted to the pressure-sensitive adhesive tape.

The Elmendorf tear strength of the substrate measured without introducing a slit is preferably as high as possible, and the upper limit of the range is, for example, 16N.

The Elmendorf tear strength measured without introducing a slit is to be measured each in the MD and the TD of the substrate, and the smaller value of these is to be used. When it is not known whether the direction is the MD or the TD, the smallest Elmendorf tear strength value may be used. The Elmendorf tear strength of the substrate measured without introducing a slit can be measured in the same manner as the Elmendorf tear method in accordance with JIS K 7128-2 (1998), except that no slit is introduced.

The Elmendorf tear strength of the substrate measured without introducing a slit can be adjusted to fall within the above-described range by appropriately selecting the material used for the substrate, the thickness of the substrate, and the like.

The thickness of the substrate is preferably 20 to 300 µm, more preferably 30 to 250 µm, and further preferably 40 to 230 µm. When the thickness of the substrate is equal to or more than any of the above lower limits, the substrate can function as a support. In addition, when the thickness is equal to or less than any of the above upper limits, the conformability to an adherend and the transparency are easily enhanced.

### (Difference between tensile loads)

The substrate has a difference between the tensile load at 2.5% elongation and the tensile load at 0.5% elongation (hereinafter, simply referred to as the "difference between tensile loads") of preferably less than 2.0 N/mm, more preferably 1.3 N/mm or less, further preferably 1 N/mm or less, and even more preferably 0.8 N/mm or less. When the difference between tensile loads of the substrate is less than 2.0 N/mm, the conformability of the pressure-sensitive adhesive tape can be further exhibited, and can be easily and properly attached to an adherend having a complex shape. Besides, the difference between tensile loads of the substrate is not particularly limited, but from the viewpoints of imparting a certain degree of stiffness and workability to the pressure-sensitive adhesive tape and effectively preventing defects during attachment, is preferably 0.05 N/mm or more, more preferably 0.08 N/mm or more, and further preferably 0.1 N/mm or more.

The difference between tensile loads of the substrate can be adjusted to fall within the above-described range by appropriately selecting the material used for the substrate, the thickness of the substrate, and the like.

### <Pressure-sensitive adhesive layer>

The pressure-sensitive adhesive tape of the present invention includes the pressure-sensitive adhesive layer on at least one side of the substrate. The pressure-sensitive adhesive layer will be described below.

### (Pressure-sensitive adhesive)

The pressure-sensitive adhesive layer is preferably made with a pressure-sensitive adhesive. The type of pressure-sensitive adhesive is not particularly limited, and examples include an acrylic pressure-sensitive adhesive, a pressure-sensitive rubber adhesive, a pressure-sensitive urethane adhesive, and a pressure-sensitive silicone adhesive. From the viewpoint of weather resistance, an acrylic pressure-sensitive adhesive is preferred. These may be used singly or may be used in combination.

It is also preferable that the pressure-sensitive adhesive layer is formed from a photocurable resin. Since, as described above, the pressure-sensitive adhesive tape has high total light transmittance, the pressure-sensitive adhesive layer can be properly cured even when it is formed from a photocurable resin. By using a photocurable resin for the pressure-sensitive adhesive layer, the layer can be formed into a thick film of 100 µm or more. As a result, the pressure-sensitive adhesive layer more readily conforms to irregularities on the surface of an adherend, thereby increasing the adhesive contact area with the adherend and reducing the risk of peeling.

Among photocurable resins, it is more preferable that the pressure-sensitive adhesive layer is formed from an acrylic pressure-sensitive adhesive. The pressure-sensitive adhesive layer may be formed from one using a photocurable polymer as the main polymer constituting the pressure-sensitive adhesive. For example, in the case of using an acrylic pressure-sensitive adhesive, the acrylic polymer may be made photocurable.

### (Acrylic pressure-sensitive adhesive)

The acrylic pressure-sensitive adhesive is a pressure-sensitive adhesive containing an acrylic polymer obtained by polymerizing a polymerizable monomer including an alkyl (meth)acrylate monomer (A).

The term "alkyl (meth)acrylate" herein has a concept encompassing both alkyl acrylate and alkyl methacrylate, and this is also applied to other similar terms mutatis mutandis. The term "polymerizable monomer" has a concept that may encompass not only a compound having no repeating unit but also a monomer itself having a repeating unit, such as an olefin polymer (C), which will be described later, as long as the monomer is a compound copolymerizable with the alkyl (meth)acrylate monomer (A).

### (Alkyl (meth)acrylate monomer (A))

The alkyl (meth)acrylate monomer (A) is an ester formed from (meth)acryl acid and an aliphatic alcohol, and is preferably an alkyl ester derived from an aliphatic alcohol having an alkyl group preferably having 2 to 14 carbon atoms, and more preferably 4 to 10 carbon atoms. When the number of carbon atoms of the alkyl group is within one of these ranges, the adhesive force is easily enhanced, and the storage elastic modulus at 23°C of a pressure-sensitive adhesive described below is easily adjusted to fall within a predetermined range.

Specific examples of the alkyl (meth)acrylate monomer (A) include ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, hexyl (meth)acrylate, heptyl (meth)acrylate, 2-ethylhexyl (meth)acrylate, n-octyl (meth)acrylate, isooctyl (meth)acrylate, nonyl (meth)acrylate, decyl (meth)acrylate, undecyl (meth)acrylate, dodecyl (meth)acrylate, tridecyl (meth)acrylate, and tetradecyl (meth)acrylate.

Among these, n-butyl (meth)acrylate, hexyl (meth)acrylate, heptyl (meth)acrylate, 2-ethylhexyl (meth)acrylate, and n-octyl (meth)acrylate are preferable, and n-butyl (meth)acrylate, 2-ethylhexyl (meth)acrylate, or a combination thereof are more preferable. In particular, when at least n-butyl (meth)acrylate is used, the pressure-sensitive adhesivity of the pressure-sensitive adhesive can be suitably controlled to enhance the workability in adhering the pressure-sensitive adhesive tape.

The alkyl (meth)acrylate monomers (A) may be used singly or may be used in combinations of two or more thereof.

The constituent unit derived from the alkyl (meth)acrylate monomer (A) is the main component of the pressure-sensitive adhesive layer, and the content thereof is generally 30 mass% or more, preferably 50 mass% or more, and more preferably 70 mass% or more, based on the total mass of the pressure-sensitive adhesive layer. Such a large content of the alkyl (meth)acrylate monomer (A) can impart the desirable adhesive force to the pressure-sensitive adhesive layer. The above-described content of the constituent unit derived from the alkyl (meth)acrylate monomer (A) is, for example, 97 mass% or less, preferably 95 mass% or less, and more preferably 90 mass% or less, in order for a certain amount or more of other components to be contained.

The content of the constituent unit derived from the alkyl (meth)acrylate monomer (A) in the pressure-sensitive adhesive layer is substantially the same as the content of the alkyl (meth)acrylate monomer (A) in a pressure-sensitive adhesive composition, which will be described later, and accordingly, the former can be expressed by replacing with the latter. The same also applies to the components other than the component (A), including the components (B) and (C), which will be described below.

### (Polar group-containing vinyl monomer (B))

The polymerizable monomer preferably contains a polar group-containing vinyl monomer (B) in addition to the alkyl (meth)acrylate monomer (A). The polar group-containing vinyl monomer (B) has a polar group and a vinyl group. The adhesive force to an adherend is easily enhanced by using the polar group-containing monomer (B).

Examples of the polar group-containing vinyl monomer (B) include a vinyl carboxylate such as vinyl acetate; a vinyl group-containing carboxylic acid such as (meth)acrylic acid and itaconic acid, and an anhydride thereof; a vinyl monomer having a hydroxyl group such as 2-hydroxyethyl (meth)acrylate, 2-hydroxypropyl (meth)acrylate, 4-hydroxybutyl (meth)acrylate, caprolactone-modified (meth)acrylate, polyoxyethylene (meth)acrylate, and polyoxypropylene (meth)acrylate; and a nitrogen-containing vinyl monomer such as (meth)acrylonitrile, N-vinylpyrrolidone, N-vinylcaprolactam, N-vinyllaurilolactam, (meth)acryloylmorpholin, (meth) acrylamide, dimethyl (meth)acrylamide, N-methylol (meth)acrylamide, N-butoxy methyl (meth)acrylamide, diethyl(meth)acrylamide, and ethylmethyl(meth)acrylamide, and dimethylaminomethyl (meth)acrylate.

Among these, a vinyl group-containing carboxylic acid such as (meth)acrylic acid and itaconic acid, an anhydride thereof, and a nitrogen-containing vinyl monomer are preferable. (Meth)acrylic acid is more preferable, and acrylic acid is further preferable. These for the polar group-containing vinyl monomer (B) may be used singly or may be used in combinations of two or more thereof.

In a case where the polar group-containing vinyl monomer (B) is used, the content of the constituent unit derived from the polar group-containing vinyl monomer (B) in the pressure-sensitive adhesive layer is preferably 1 to 15 parts by mass, more preferably 2 to 12 parts by mass, and further preferably 3 to 10 parts by mass, per 100 parts by mass of the constituent unit derived from the alkyl (meth)acrylate monomer (A). The adhesive force of the pressure-sensitive adhesive tape is easily enhanced when the content of the polar group-containing vinyl monomer (B) is within such a range.

### (Olefin polymer (C))

Preferably, the polymerizable monomer further includes an olefin polymer (C) having a polymerizable bond on either one end. The adhesive force of the pressure-sensitive adhesive tape is easily enhanced by using such an olefin polymer (C).

The polymerizable bond means an unsaturated carbon-carbon bond that is capable of polymerizing with a polymerizable monomer. Examples thereof include an unsaturated double bond, and preferable examples thereof include a (meth)acryloyl group.

Examples of the olefin polymer (C) include a polyolefin having a (meth)acryloyl group on either one end. The polyolefin means a polymer of an aliphatic hydrocarbon compound having a double bond, such as ethylene, propylene, butane, butadiene, or isoprene, or a hydrogenated product thereof.

Examples of the polyolefin having a (meth)acryloyl group on either one end include a polyethylene having a (meth)acryloyl group on either one end that is prepared by reacting a polyethylene having an epoxy group on either one end with (meth)acrylic acid. Other examples include a polybutadiene having a (meth)acryloyl group on either one end and a hydrogenated product thereof, and examples of a commercially available product thereof include "L-1253" manufactured by KURARAY CO., LTD.

The olefin polymer (C) preferably has a number-average molecular weight of 500 to 20000, and more preferably 1000 to 10000. The number-average molecular weight may be measured by gel permeation chromatography (GPC) and calculated using a calibration curve of standard polystyrene.

The content of the constituent unit derived from the olefin polymer (C) in the pressure-sensitive adhesive layer is preferably 1 to 30 parts by mass, more preferably 2 to 20 parts by mass, and further preferably 4 to 15 parts by mass, per 100 parts by mass of the constituent unit derived from the alkyl (meth)acrylate monomer (A).

### (Crosslinking agent (D))

Preferably, the polymerizable monomer further includes a crosslinking agent. Examples of the crosslinking agent include a polyfunctional monomer having two or more vinyl groups, and preferable examples include a polyfunctional (meth)acrylate having two or more (meth)acryloyl groups. The adhesive force of the pressure-sensitive adhesive layer is easily adjusted to fall within an appropriate range by using the polyfunctional monomer.

Examples of the polyfunctional (meth)acrylate include, but are not limited to, hexanediol di(meth)acrylate, ethoxylated bisphenol A di(meth)acrylate, triacrylate of tris(2-hydroxyethyl) isocyanurate, ethoxylated trimethylolpropane triacrylate, proxylated trimethylolpropane triacrylate, proxylated glyceryl triacrylate, diacrylate of neopentyl glycol adipate, and also polymers, such as polyethylene glycol di(meth)acrylate, polypropylene glycol di(meth)acrylate, and liquid hydrogenated 1,2-polybutadiene di(meth)acrylate. Among these polyfunctional (meth)acrylates, the polymer is preferable, and liquid hydrogenated 1,2-polybutadiene di(meth)acrylate is more preferable. Examples of a commercially available product of liquid hydrogenated 1,2-polybutadiene di(meth)acrylate include "TEAI-1000" manufactured by NIPPON SODA CO., LTD.

The content of the constituent unit derived from the crosslinking agent in the pressure-sensitive adhesive layer is preferably 0.1 to 4 parts by mass, more preferably 0.3 to 3 parts by mass, and further preferably 0.5 to 2 parts by mass, per 100 parts by mass of the constituent unit derived from the alkyl (meth)acrylate monomer (A). When the content of the crosslinking agent is within the above range, the adhesive force of the pressure-sensitive adhesive layer can be easily adjusted to a suitable range.

### (Tackifier resin)

The acrylic pressure-sensitive adhesive may contain a tackifier resin in terms of enhancing the adhesive force. The tackifier resin is preferably a tackifier resin having less capability of inhibiting polymerization, including hydrogenated terpene resin, hydrogenated rosin, disproportionated rosin resin, and petroleum resin. Since a tackifier resin having many double bonds inhibits the polymerization reaction, a hydrogenated tackifier resin is preferable among the above, and a hydrogenated petroleum resin is particularly preferable.

The softening point of the tackifier resin may be about 95°C or more from the viewpoint of enhancing the cohesive force and the adhesive force of the pressure-sensitive adhesive, and one having a softening point of 120°C or more is preferably included. Besides, from the viewpoint of enhancing the pressure-sensitive adhesivity to an adherend, for example, one having a softening point of 95°C or more and less than 120°C and one having a softening point of 120°C or more and 150°C or less may be used in combination. The softening point can be measured by the ring-and-ball test method defined by JIS K2207.

The content of the tackifier resin in the acrylic pressure-sensitive adhesive is preferably 3 to 40 parts by mass, more preferably 5 to 35 parts by mass, and further preferably 7 to 25 parts by mass, per 100 parts by mass of the constituent unit derived from the alkyl (meth)acrylate monomer (A).

### (Fine particle)

The acrylic pressure-sensitive adhesive may contain fine particles. The adhesive force can be enhanced when the fine particle is contained.

Examples of the fine particle include an inorganic hollow particles such as a glass balloon, a shirasu balloon, and a fly ash balloon; an organic hollow particles made of polymethyl methacrylate, acrylonitrile/vinylidene chloride copolymer, polystyrene, phenolic resin, etc.; an inorganic fine particle such as glass beads, silica beads, and synthetic mica; and an organic fine particle made of ethyl polyacrylic acid, polyurethane, polyethylene, polypropylene, etc.

The content of the fine particle in the acrylic pressure-sensitive adhesive is preferably 0.1 to 15 parts by mass, more preferably 0.3 to 10 parts by mass, and further preferably 0.5 to 5 parts by mass, per 100 parts by mass of the constituent unit derived from the alkyl (meth)acrylate monomer (A).

### (Other components)

In addition to the components described hereinabove, the acrylic pressure-sensitive adhesive used in the pressure-sensitive adhesive layer may contain various additives conventionally used for a pressure-sensitive adhesive, including a plasticizer, a softener, a pigment, a dye, a dispersant, a photopolymerization initiator, and a flame retardant.

Components usable in the acrylic pressure-sensitive adhesive are not limited to those described above, and components other than those described above may be used. For example, as the crosslinking agent (D), one other than the above may be used, and instead of the polymerizable monomer, other crosslinking agents usable for the acrylic pressure-sensitive adhesive, such as an isocyanate-based crosslinking agent, may be used as appropriate. Furthermore, the olefin polymer (C), the fine particle, and the like may be omitted.

### (Pressure-sensitive rubber adhesive)

The pressure-sensitive rubber adhesive contains a rubber component and a tackifier resin. As the rubber component, a styrene/isoprene block copolymer is preferably used. The styrene/isoprene block copolymer preferably has a diblock ratio of 25 to 70 mass%, more preferably 30 to 65 mass%, and further preferably 45 to 60 mass%. The diblock here refers to a diblock composed of styrene and isoprene. When the diblock ratio is within the above-described range, the adhesive force is easily enhanced. In addition to the diblock, the styrene/isoprene block copolymer also includes those having three or more blocks, such as a triblock composed of styrene, isoprene, and styrene blocks.

The amount of styrene in the styrene/isoprene block copolymer is not particularly limited, and preferably 14 to 24 mass%, and more preferably 15 to 18 mass%. When the amount of styrene is 14 mass% or more, the pressure-sensitive adhesive having a high cohesiveness is easily obtained. When the amount of styrene is 24 mass% or less, the pressure-sensitive adhesive has a cohesive force at an appropriate level to easily develop an adhesive force.

The molecular weight of the styrene/isoprene block copolymer is not particularly limited, and the weight-average molecular weight thereof is preferably 100,000 to 400,000, and more preferably 150,000 to 250,000. The weight-average molecular weight as used herein refers to that measured as a molecular weight in terms of polystyrene by the gel permeation chromatography (GPC) method.

Various tackifier resins can be used as the tackifier resin used for the pressure-sensitive rubber adhesive, and preferably, a petroleum-based resin, a terpene resin, or a kumaron resin is used. The tackifier resins can be used singly or in combinations of two or more thereof, and it is preferable to use a petroleum-based resin in combination with at least one selected from a terpene resin and a kumaron resin. Such combinations of the tackifier resins are likely to render the adhesive force great.

Examples of the petroleum-based resin include an aliphatic petroleum resin (C5 petroleum resin), an alicyclic petroleum resin, and an aromatic petroleum resin, and the aliphatic petroleum resin is preferable in terms of the compatibility with the styrene/isoprene block copolymer. It is preferable to use a petroleum-based resin having a softening point of about 90 to 120°C.

As the terpene resin, one having a softening point of about 80 to 120°C can be used, and one having a softening point less than 100°C is preferable in terms of securing the adhesive force. As the kumaron resin, one preferably having a softening point of 110 to 130°C, more preferably 115 to 125°C is used in order to secure the cohesive force.

The amount of the tackifier resin is preferably 60 to 250 parts by mass, more preferably 100 to 200 parts by mass, and further preferably 110 to 180 parts by mass, per 100 parts by mass of the rubber component. When the amount of the tackifier resin blended is within the above-described range, the cohesive force can be greater so that an appropriate adhesive force can be imparted.

When the petroleum-based resin is used in combination with at least one selected from the terpene resin and the kumaron resin, the amount of the petroleum-based resin is preferably 50 to 200 parts by mass, preferably 60 to 150 parts by mass, and more preferably 60 to 110 parts by mass, per 100 parts by mass of the rubber component. On the other hand, the amount of the terpene resin is preferably 10 to 70 parts by mass, more preferably 20 to 60 parts by mass, and further preferably 30 to 50 parts by mass, per 100 parts by mass of the rubber component. The amount of the kumaron resin is preferably 10 to 60 parts by mass, more preferably 15 to 50 parts by mass, and further preferably 20 to 40 parts by mass, per 100 parts by mass of the rubber component.

As in the acrylic pressure-sensitive adhesive, the pressure-sensitive rubber adhesive may contain the fine particle described hereinbefore, and the pressure-sensitive rubber adhesive may also contain a sacrificial protective metal, an electroconductive material, a softener, an antioxidant, a filler, and the like, as necessary.

### (Pressure-sensitive urethane adhesive)

The pressure-sensitive urethane adhesive is not particularly limited, and examples thereof include a urethane resin obtained by reacting at least a polyol and a polyisocyanate compound. Examples of the polyol include a polyether polyol, a polyester polyol, a polycarbonate polyol, and a polycaprolactone polyol. Examples of the polyisocyanate compound include diphenylmethane diisocyanate, tolylene diisocyanate, and hexamethylene diisocyanate. These pressure-sensitive urethane adhesives may be used singly or in combinations of two or more thereof.

A urethane resin obtained by reacting a polyurethane polyol and a polyfunctional isocyanate-based curing agent may also be used as the pressure-sensitive urethane adhesive. Examples of the polyurethane polyol include a reaction product of the above-described polyol and polyisocyanate compound, and a reaction product of the polyol, the polyisocyanate compound, and a chain extender such as a diamine. The polyfunctional isocyanate-based curing agent may be a compound having two or more isocyanate groups, and the isocyanate compound described above may be used therefor.

The pressure-sensitive urethane adhesive may contain the fine particle described hereinbefore in addition to the urethane resin, and may also contain a tackifier resin, a sacrificial protective metal, an electroconductive material, a softener, an antioxidant, and a filler, and the others, when necessary.

### (Pressure-sensitive silicone adhesive)

Examples of the pressure-sensitive silicone adhesive include pressure-sensitive silicone adhesives of addition reaction-type, peroxide curing-type, and condensation reaction-type. Among these, the pressure-sensitive silicone adhesive of addition reaction-type is preferably used in terms of curability at a low temperature for a short time. The pressure-sensitive silicone adhesive of addition reaction type is cured while the pressure-sensitive adhesive layer is formed. When the pressure-sensitive silicone adhesive of addition-reaction type is used as the pressure-sensitive silicone adhesive, the pressure-sensitive silicone adhesive may include a catalyst such as a platinum catalyst.

The pressure-sensitive silicone adhesive may contain fine particles, and a crosslinking agent and various additives for controlling the adhesive force may also be added thereto.

### (Metal having a lower potential than that of iron)

The pressure-sensitive adhesive layer preferably includes a metal having a lower potential than that of iron. When the metal having a lower potential than that of iron (hereinafter, also referred to as a "sacrificial protective metal") is contained, sacrificial protectability for iron is imparted, and the anticorrosive property of the pressure-sensitive adhesive tape is enhanced. The sacrificial protective metal is dispersed in the pressure-sensitive adhesive forming the pressure-sensitive adhesive layer.

Examples of the sacrificial protective metal include cadmium, chromium, zinc, manganese, and aluminum. Among these, zinc and aluminum are preferable, and zinc is particularly preferable. When zinc is used, the sacrificial protectability is excellent.

The sacrificial protective metal, which is dispersed as a filler in the pressure-sensitive adhesive, may be in any form, such as a particulate form, a scale-like form, or a spindle-like form, and is preferably in a particulate form. The sacrificial protective metal in a particulate form is easily dispersed in the pressure-sensitive adhesive layer with almost no decrease in the pressure-sensitive adhesivity of the pressure-sensitive adhesive layer.

Herein, a particulate form means a form having a small ratio of the length in the major axial direction to the length in the minor axial direction (aspect ratio), and the aspect ratio is, for example, 3 or less, and is preferably 2 or less. The particulate form is not particularly limited and may be a spherical shape or irregular shape such as a powder. The above-described metal in a particulate form has a particle size of, for example, 1 to 500 µm and preferably, 1 to 200 µm. The particle size herein means an average particle size determined by the laser diffraction scattering method.

When the pressure-sensitive adhesive layer contains the sacrificial protective metal, the content of the sacrificial protective metal in the pressure-sensitive adhesive layer is, based on the total mass of the pressure-sensitive adhesive layer, for example, 0.5 to 30 mass%, preferably 1 to 20 mass%, and more preferably 2 to 15 mass%. When the content of the sacrificial protective metal is equal to or more than any of these lower limits, the sacrificial anticorrosive property gets better to enhance the anticorrosion performance. When the content is equal to or less than any of the upper limits, the adhesive force is increased, and the transparency of the pressure-sensitive adhesive tape can be further ensured.

It is also a preferred embodiment that the pressure-sensitive adhesive layer does not contain a sacrificial protective metal. When no sacrificial protective metal is contained, the adhesive force of the pressure-sensitive adhesive tape is maintained higher compared to the case where it is contained, and thus, the pressure-sensitive adhesive tape is less likely to peel off from an adherend, thereby blocking water and oxygen and facilitating enhancement of the anticorrosive property. Furthermore, the transparency of the pressure-sensitive adhesive tape can be ensured.

### (Electroconductive material)

The pressure-sensitive adhesive layer may contain an electroconductive material in addition to the sacrificial protective metal. The pressure-sensitive adhesive layer preferably contains an electroconductive material when containing the sacrificial protective metal. When the pressure-sensitive adhesive layer is allowed to contain an electroconductive material, it becomes easier to transfer electrons, emitted when the sacrificial protective metal is ionized, onto the adherend to thereby easily enhance the sacrificial protectability.

Examples of the electroconductive material include one or two or more selected from a carbon material, a metal material, a metal oxide material, an ionic polymer, and an electroconductive polymer.

Examples of the carbon material include carbon black, graphite, graphene, carbon nanotube, and acetylene black. Examples of the metal material include iron, and a metal having a higher potential than that of iron, such as gold, silver, copper, nickel, or an alloy including any of these. Examples of the metal oxide material include indium tin oxide (ITO), antimony trioxide (ATO), fluorine-doped tin oxide (FTO), and zinc oxide. Examples of the electroconductive polymer include polyacetylene, polypyrrole, PEDOT (polyethylene dioxythiophene), PEDOT/PSS (a composite of polyethylene dioxythiophene and polystyrene sulfonic acid), polythiophene, polyaniline, poly(p-phenylene), polyfluorene, polycarbazole, polysilane, or a derivative thereof. Examples of the ionic polymer include sodium polyacrylate and potassium polyacrylate.

These electroconductive materials may be used singly or in combinations of two or more thereof.

Among those described above, as the electroconductive material, carbon materials are preferred, and carbon nanotubes are more preferred.

### (Carbon nanotube)

The pressure-sensitive adhesive layer preferably contains a carbon nanotube as the electroconductive material as described above. When the carbon nanotube is contained, the sacrificial protectability of the pressure-sensitive adhesive layer can be enhanced, and the adhesive force and transparency can be maintained at high levels. Accordingly, a pressure-sensitive adhesive tape having high adhesive force , sacrificial protectability, and high transparency can be easily obtained. The reason for this is probably as follows: although carbon nanotube is an electroconductive material, the amount of carbon nanotube necessary for developing the sacrificial protectability at a certain level is smaller than that of other kinds of the electroconductive material, and thus the extent of the decrease in the adhesive force by carbon nanotube is smaller.

The carbon nanotube is a material in a tube form that is made of carbon. The carbon nanotube is excellent in the electrical properties, and can be combined with a resin or the like to form, for example, a sheet having a high electroconductivity. The carbon nanotube is a substance having a structure in which a graphite sheet is cylindrically rolled up, the graphite sheet having a carbon atomic arrangement in the form of a reticulated pattern of hexagons. A mono-layered roll is called a single-wall carbon nanotube, and a multi-layered roll is called a multi-wall carbon nanotube.

The kind of the carbon nanotube is not particularly limited, and may be any of a single-wall carbon nanotube, a multi-wall carbon nanotube, and a mixture including them in an arbitrary ratio. Carbon nanotubes produced by any of various methods, including an arc discharge method, a laser evaporation method, and a chemical vapor deposition method (CVD method), may be used.

The average diameter of the carbon nanotube is preferably 1 to 100 nm, and more preferably 2 to 15 nm. The average length of the carbon nanotube is preferably 0.1 to 1000 µm, and more preferably 10 to 500 µm. The aspect ratio (average length/ average diameter) of the carbon nanotube is preferably 10 to 100000, and more preferably 500 to 30000.

The diameter of the carbon nanotube means the outer diameter in a case of a single-wall carbon nanotube, and the outer diameter of the outermost tube in a case of a multi-wall carbon nanotube. The diameter and the length of the carbon nanotube may be measured in an image obtained by observation under a transmission electron microscope (TEM), for example, and the average diameter and the average length may be determined as an arithmetic average on fifty randomly selected nanotubes.

From the viewpoints of the sacrificial protectability and the adhesive force of the pressure-sensitive adhesive layer, and the transparency of the pressure-sensitive adhesive tape, the content of the electroconductive material in the pressure-sensitive adhesive layer is, based on the total mass of the pressure-sensitive adhesive layer, preferably 0.001 to 10 mass%, more preferably 0.002 to 5 mass%, and further preferably 0.003 to 3 mass%.

When the electroconductive material is a carbon nanotube, the content of the carbon nanotube in the pressure-sensitive adhesive layer is, based on the total mass of the pressure-sensitive adhesive layer, preferably 0.0005 to 0.7 mass%, more preferably 0.002 to 0.05 mass%, and further preferably 0.003 to 0.045 mass%.

When the content of the carbon nanotube is equal to or more than any of these lower limits, the sacrificial protectability is easily increased. When the content of the carbon nanotube is equal to or less than any of these upper limits, the adhesive force is easily increased, and the transparency of the pressure-sensitive adhesive tape can be further ensured.

### (Method for producing acrylic pressure-sensitive adhesive and pressure-sensitive adhesive layer)

The pressure-sensitive adhesive layer can be produced by general formation methods of a pressure-sensitive adhesive layer, and now, methods for producing an acrylic pressure-sensitive adhesive and a pressure-sensitive adhesive layer will be described in detail by exemplifying a case in which the pressure-sensitive adhesive is an acrylic pressure-sensitive adhesive, and is photocurable.

The acrylic pressure-sensitive adhesive can be obtained by irradiating a pressure-sensitive adhesive composition with light to polymerize the polymerizable monomer, the composition including the above-described polymerizable monomer and, optionally, a sacrificial anticorrosive metal and an electroconductive material. The pressure-sensitive adhesive composition may also include at least one of the tackifier resin, the fine particle, or the other components, which are described hereinabove, as necessary.

More specifically, a pressure-sensitive adhesive composition is obtained by first charging a reaction vessel, such as a glass container, with a polymerizable monomer, optionally a sacrificial protective metal and an electroconductive material, and optionally a tackifier resin, fine particles, and other components, and then mixing the mixture.

Next, inert gas such as nitrogen gas in general is supplied to purge oxygen for removing dissolved oxygen from the pressure-sensitive adhesive composition. The pressure-sensitive adhesive layer can be obtained by applying the resultant pressure-sensitive adhesive composition to a release sheet or a substrate, and irradiating the composition with light to polymerize the polymerizable monomer.

The process from the application of or impregnation with the pressure-sensitive adhesive composition to the irradiation with light is preferably carried out in inert gas atmosphere or in a condition that oxygen is blocked by a film or the like.

In this production method, the pressure-sensitive adhesive composition obtained by mixing the components may be pre-polymerized before application to the release sheet, the support, or the like, in order to increase the viscosity.

### (Storage elastic modulus)

The pressure-sensitive adhesive layer preferably has a storage elastic modulus G' at 23°C of 50000 to 1000000 Pa. When the storage elastic modulus G' at 23°C falls within the above range, in the case in which the pressure-sensitive adhesive layer is damaged by an external impact or the like, the force to restore the damaged portion (hereinafter, also referred to as a self-restoring force) increases. As a result, the anticorrosion performance is enhanced, and for example, in use for steel, formation of rust can be easily suppressed.

The storage elastic modulus G' at 23°C of the pressure-sensitive adhesive layer is more preferably 200000 to 800000 Pa and further preferably 300000 to 600000 Pa, in terms of enhancing the self-restoring force and enhancing the anticorrosion performance.

The storage elastic modulus can be calculated by measuring a dynamic viscoelastic spectrum.

As described later, in the case where both a first pressure-sensitive adhesive layer and a second pressure-sensitive adhesive layer are provided, the pressure-sensitive adhesive layer disposed on the surface side, i.e., the second pressure-sensitive adhesive layer, may have the same constitution as that of the pressure-sensitive adhesive layer described above.

On the other hand, the constitution of the first pressure-sensitive adhesive layer is not particularly limited, and it may be formed from any known pressure-sensitive adhesive, and may be formed from a pressure-sensitive adhesive such as an acrylic pressure-sensitive adhesive, a pressure-sensitive rubber adhesive, a pressure-sensitive urethane adhesive, or a pressure-sensitive silicone adhesive, among which an acrylic pressure-sensitive adhesive is preferred. Since the details of the pressure-sensitive adhesive in the first pressure-sensitive adhesive layer are as described above, a detailed description thereof is omitted.

### (Thickness)

The thickness of the pressure-sensitive adhesive layer is preferably 50 to 2500 µm, more preferably 60 to 2200 µm, and further preferably 80 to 1500 µm. When the thickness is equal to or more than any of these lower limits, the self-restoring force and the like increase, the anticorrosive property of the pressure-sensitive adhesive tape can be enhanced, and the adhesive force easily increases. When the thickness of the pressure-sensitive adhesive layer is equal to or less than any of the upper limits, an effect of enhancing the anticorrosion performance in accordance with the thickness can be obtained, and the transparency of the pressure-sensitive adhesive tape can become excellent.

When the first pressure-sensitive adhesive layer and the second pressure-sensitive adhesive layer are provided as described later, the thickness of the first pressure-sensitive adhesive layer is preferably 5 to 100 µm, more preferably 10 to 50 µm, and further preferably 30 to 50 µm. Furthermore, the thickness of the second pressure-sensitive adhesive layer is within the same range as the thickness of the first pressure-sensitive adhesive layer described above. The first pressure-sensitive adhesive layer and the second pressure-sensitive adhesive layer may have the same thickness or different thicknesses.

### <Intermediate layer>

The pressure-sensitive adhesive tape of the present invention may include an intermediate layer between the first pressure-sensitive adhesive layer and the second pressure-sensitive adhesive layer. Examples of the intermediate layer include sheet-like materials such as a foam, a resin film, and a non-woven fabric.

Examples of the foam include polyolefin resin foams such as a polyethylene foam, a modified polyethylene foam, and a polypropylene foam, a polystyrene foam, a styreneacrylonitrile copolymer foam, a polyvinyl chloride foam, a polyvinyl alcohol foam, a cellulosic foam, a polyamide foam, a polyurethane foam, a phenolic resin foam, a urea resin foam, an epoxy resin foam, an acrylic resin foam, a silicone resin foam, a vinyl resin foam, and a polyimide foam.

Examples of the resin film include polyolefinic resin films such as a polypropylene resin film, a polyethylene resin film, and an ethylene/vinyl acetate copolymer (EVA) resin film, a polyester resin film, a polyamide resin film, an acrylic resin film, a polyurethane resin film, a polystyrene resin film, a polyvinyl chloride resin film, an ethylene vinyl acetate resin film, an acrylonitrile resin film, a fluorine film, a polycarbonate film, an AES resin film, and an ASA resin film.

The non-woven fabric is non-woven fabric formed of synthetic resin fiber, for example, polyamide, polyester, polyacrylic, polyolefin, or polyurethane fiber.

These sheet-like materials can be used singly or in combinations of two or more thereof. From the viewpoint of protecting an adherend from impact, the substrate is preferably a foam, and more preferably a polyolefin resin foam or an acrylic resin foam.

The thickness of the intermediate layer is not particularly limited, and is preferably 100 to 3000 µm, more preferably 500 to 2000 µm, and further preferably 800 to 1500 µm. When the thickness of the substrate is equal to or more than any of these lower limits, it can function as a support, and can appropriately protect the adherend from impact. When the thickness of the substrate is equal to or less than any of these upper limits, the workability is enhanced, and the pressure-sensitive adhesive tape is easily handled as a tape.

### <Constitution of pressure-sensitive adhesive tape>

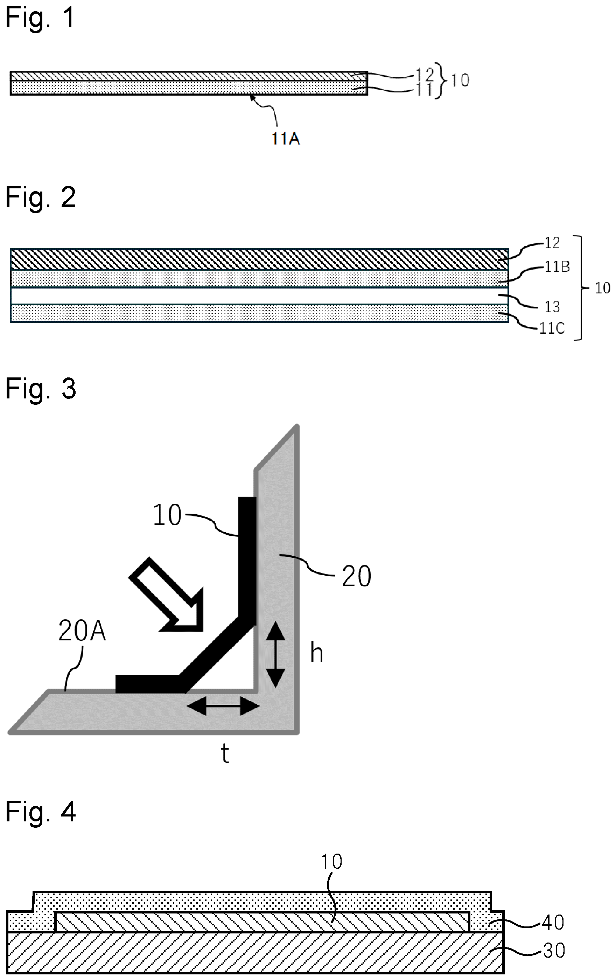

The pressure-sensitive adhesive tape of the present invention is preferably a pressure-sensitive adhesive single coated tape that is a pressure-sensitive adhesive tape 10 including a substrate 12 and a pressure-sensitive adhesive layer 11 provided on one side of the substrate 12 as illustrated in Fig. 1. Thus, the pressure-sensitive adhesive layer 11 can be protected by the substrate 12.

The pressure-sensitive adhesive tape is adhered to an adherend for use, with the surface 11A of the pressure-sensitive adhesive layer 11 serving as the adhesive surface.

Alternatively, the pressure-sensitive adhesive tape 10 of the present invention may be a pressure-sensitive adhesive single coated tape including a substrate 12, and a first pressure-sensitive adhesive layer 11B, an intermediate layer 13, and a second pressure-sensitive adhesive layer 11C all provided on one side of the substrate 12 as illustrated in Fig. 2.

The pressure-sensitive adhesive tape may be a pressure-sensitive adhesive double coated tape including a substrate and a pressure-sensitive adhesive layer provided on each side of the substrate, not shown.

The pressure-sensitive adhesive tape of the present invention may include a release sheet attached on the surface of the pressure-sensitive adhesive layer. The release sheet may be peeled off from the pressure-sensitive adhesive layer before use of the pressure-sensitive adhesive tape to expose the pressure-sensitive adhesive layer and then may be attached on an adherend with the exposed pressure-sensitive adhesive layer. More specifically, of the sides of the pressure-sensitive adhesive layer, the release sheet may be attached to the side opposite to the side on which the substrate is provided, that is, the surface 11A.

A resin film may be used as the release sheet, and the side to be attached to the pressure-sensitive adhesive layer is preferably a release-treated side, which has been release-treated with a silicone release agent or the like.

When the release sheet is attached, the various physical properties including the total light transmittance, the tensile elongation at break, and the difference between tensile loads measured after peeling the release sheet are used.

### <Applications, method of use>

The pressure-sensitive adhesive tape of the present invention is preferably used on the surface of a concrete structure or the surface of a structure having a rusted part. The pressure-sensitive adhesive tape of the present invention is excellent not only in conformability and transparency but also in weather resistance. Since the pressure-sensitive adhesive tape of the present invention possesses these properties, it is particularly suitable for long-term use on a concrete structure or a structure having a rusted part installed outdoors. Furthermore, the pressure-sensitive adhesive tape of the present invention is also preferably used for anti-corrosion purposes to prevent the corrosion of a metallic material and the like. The pressure-sensitive adhesive tape of the present invention may also be used on the surface of a metallic material having a rusted part other than structures.

More specifically, by attaching the pressure-sensitive adhesive tape of the present invention to a corroded area or a damaged area of the aforementioned structure, it is possible to suppress the progression of corrosion or damage, or the corrosion of the structure or metallic material originating from the damaged area. Furthermore, due to its excellent transparency, the pressure-sensitive adhesive tape of the present invention allows the progress of corrosion or damage at a corroded or damaged portion, as well as the conformability of the tape to the portion, to be visually inspected through the tape even after attachment. Thus, it is possible to take appropriate preventive maintenance measures, such as monitoring the status of corrosion or damage in the area to which the tape has been attached, or to implement a repair action according to the degree of progression of corrosion or damage.

Examples of the concrete structure include a viaduct, a tunnel, an embankment, an architectural structure such as a building, a mooring facility in a port, a utility pole, and a dam. The concrete structure may contain an internal metallic material such as a steel material. In a concrete structure with a damaged area such as a crack, an internal steel material can be corroded due to water ingress through such an area. However, by attaching the pressure-sensitive adhesive tape of the present invention to such a damaged area, it is possible to prevent water ingress and thereby inhibit the corrosion of the internal steel material and the like.

Besides, the structure or the metallic material having a rusted part is not particularly limited as long as it is a structure or a metallic material having a rusted part. Examples include structures composed of various metallic materials, such as an iron bridge, a tank, a plant, machinery and equipment in a factory, a signboard, a road sign, a guardrail, a container, a power transmission facility, a water pipe, and a ship, or a metallic material other than the structure. The metal material preferably contains at least one selected from the group consisting of iron and an alloy including iron. Specific examples of the alloy including iron include various steel materials, including alloy steels such as nickel chromium steel, nickel chrome molybdenum steel, chrome steel, chrome molybdenum steel, and manganese steel, and carbon steel. Furthermore, for a structure having a rusted part, the pressure-sensitive adhesive tape may be attached to the rusted surface of the structure. It should be noted that rust refers to a corroded portion of a metal, and is not limited to red rust or brown rust caused in iron and the like, but encompasses various types of rust such as verdigris, black rust, and white rust.

The pressure-sensitive adhesive tape of the present invention may be attached after a rust progression inhibitor or a primer is applied onto the surface for attachment. The rust progression inhibitor that can be used in the present invention is not particularly limited, and examples include one having an adsorptive action to adsorb moisture and salts, which are causative agents of rust, and a rust converter that converts red rust into black rust. By applying these rust progression inhibitors to the tape attachment surface when attaching the tape to a structure having a rusted part, the effect of preventing the progression of corrosion can be more easily enhanced. On the other hand, as for the primer, it is preferable to use one that possesses alkali-resistant properties. By applying a primer with alkali-resistant properties to the tape attachment surface before attaching the tape to a concrete structure, the effect of preventing the progression of corrosion can be more easily enhanced. Both the rust progression inhibitor and the primer may be any of known agents; however, one possessing transparency is preferable from the viewpoint of allowing the attachment surface to be visually inspected.

The pressure-sensitive adhesive tape of the present invention may be attached, for use, to an adherend other than the surface of a concrete structure or a structure having a rusted part, and for example, it may be attached, for use, to the surface of a metallic structure or a metallic material other than a metallic structure, regardless of the presence or absence of a rusted part, such as a metallic structure having no rusted part. The metallic structure is not particularly limited, and examples include structures composed of the various metallic materials mentioned above, among which a steel structure is preferred. Furthermore, metallic materials other than the metallic structure are as described above. It should be noted that the metallic material is preferably used in a civil engineering member or a building. Since the metallic structure and metallic material are as described above, their detailed descriptions are omitted.

Furthermore, mortar or concrete other than a concrete structure may be used as the adherend. Specifically, the pressure-sensitive adhesive tape of the present invention may be used, for example, for the purpose of protecting the foundation adjustment section of a manhole. In this case, the pressure-sensitive adhesive tape may be attached, for use, to the mortar surface constituting the foundation adjustment section or the concrete surface constituting a bottom block. By using the pressure-sensitive adhesive tape for such applications, it is possible to suppress the degradation of the foundation adjustment section of the manhole caused by hydrogen sulfide generated in a manhole, or by sulfuric acid generated when the hydrogen sulfide condenses inside a manhole.

Furthermore, the pressure-sensitive adhesive tape of the present invention may be attached, for use, to various underwater materials used in water, such as a structure, and concrete, mortar, or a metallic material other than the structure, used in or on the sea. The underwater materials are not particularly limited, and specific examples include those used underwater, such as a wharf, a quay, a pier, a wave-dissipating block, and a fishing net, as well as those floated on the sea for use, such as a ship and a buoy.

Furthermore, the pressure-sensitive adhesive tape may be attached, for use, to an underwater device, such as a sensor used in or on the sea.

In the adherend used in or on the sea, the pressure-sensitive adhesive tape may be used for the purpose of preventing the attachment of an aquatic organism, such as a barnacle.

Needless to say, the location where the pressure-sensitive adhesive tape of the present invention is used is not limited to the sea, and for example, it may be used in a river, a lake, and a marsh. In using the pressure-sensitive adhesive tape, it is preferable to attach it to at least a portion that comes into contact with water, particularly seawater.

### Examples

Now, the present invention will be described in more detail with reference to Examples, but the present invention is not limited in any way by these Examples.

### [Evaluation method]

The pressure-sensitive adhesive tape was evaluated by the following evaluation methods in Examples and Comparative Examples.

### <Difference between tensile loads of substrate>

A difference between tensile loads of a substrate was measured by the same measurement method as a difference between tensile loads of a pressure-sensitive adhesive tape described later, except that a substrate film used in each of Examples and Comparative Examples was used as a measurement sample.

### <Ultraviolet transmittance>

The substrate film used in each of Examples and Comparative Examples was set in a spectrophotometer (product name "V-750", manufactured by JASCO Corporation), and the ultraviolet transmittance was measured. During the measurement, the spectrophotometer was set to the following conditions.

### (Conditions of spectrophotometer)

With the wavelength of ultraviolet light emitted from a light source set to 300 to 750 nm, the data acquisition interval set to 0.5 nm, and the scanning speed set to 1,000 nm/min, the ultraviolet transmittance at 340 nm was read.

### <Color difference (ΔE) after accelerated weather resistance test>

The substrate film used in each of Examples and Comparative Examples was used for measurement with a colorimeter (product name "CR-400", manufactured by Konica Minolta, Inc.). Furthermore, the color difference (ΔE) was calculated using the color coordinates in the CIE 1976 (L*a*b*) color space (refer to JIS K 5600 4-4) according to the expression shown below.

Regarding L*_{after acceleration}, a*_{after acceleration}, and b*_{after acceleration}, the L*, a*, and b* values of the substrate film after conducting an accelerated weather resistance test for 500 hours in accordance with Cycle A in JIS K5600-7-7 were measured. As for L*ᵢₙᵢₜᵢₐₗ, a*ᵢₙᵢₜᵢₐₗ, and b*ᵢₙᵢₜᵢₐₗ, the L*, a*, and b* values of the substrate film before the accelerated weather resistance test were measured. The accelerated weather resistance test was conducted with the four edges of the substrate film attached and fixed to a SUS plate with a curing tape or the like. In addition, the color difference of the substrate film was measured with the film placed on the SUS plate. $Δ {E *}_{ab} = {\left[{\left(ΔL*\right)}^{2}+{\left(Δa*\right)}^{2}+{\left(Δb*\right)}^{2}\right]}^{1 / 2}$ $ΔL * = {L *}_{initial} - {L *}_{after acceleration}$ $Δa * = {a *}_{initial} - {a *}_{after acceleration}$ $Δb * = {b *}_{initial} - {b *}_{after acceleration}$

### <Elmendorf tear strength>

The Elmendorf tear strength was measured by the same method as the Elmendorf tear method in accordance with JIS K7128-2 (1998), except that the measurement was performed without introducing a slit in a specimen. The measurement was conducted in both the MD and the TD, and the smaller value was defined as the Elmendorf tear strength (N) of the substrate.

### <Dimensional change rate>

### 1. Preparation of specimen

A specimen was obtained by cutting the film used in each of Examples and Comparative Examples into a 60 mm square. The length of the diagonal of the cut specimen was measured. This diagonal length was defined as the diagonal A.

### 2. Calculation of dimensional change rate

The specimen obtained in 1 above was immersed in xylene for 5 minutes. After the immersion, the length of the diagonal of the specimen was measured. This diagonal length was defined as the diagonal B.

The dimensional change rate of the substrate of the tape was calculated based on the two diagonal lengths thus obtained. The expression for determining the dimensional change rate was as follows: 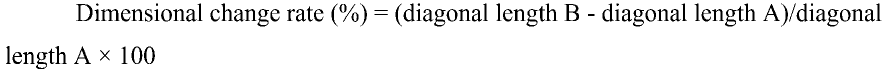 Dimensional change rate (%) = (diagonal length B - diagonal length A)/diagonal length A × 100

### <Gloss retention>

The pressure-sensitive adhesive tape obtained in each of Examples and Comparative Examples (25 mm in width and 100 mm in length) was attached, and the gloss of the substrate was measured by irradiating the surface of the tape from the substrate side with a handy gloss meter (product name "IG-340", manufactured by Horiba, Ltd.). The gloss was measured with the handy gloss meter with a 60°-geometric condition in accordance with JIS K 5600-4-7. The gloss obtained from this measurement was defined as the gloss A. Subsequently, the tape was attached to the entire surface of a steel plate SS400 (150 mm × 70 mm, manufactured by TP Giken Co., Ltd.), and an accelerated weather resistance test was conducted for 500 hours in accordance with Cycle A in JIS K 5600-7-7. After conducting the accelerated weather resistance test, the haze of the substrate of the tape was measured by the same method as that performed before the test. The gloss obtained in the measurement after the test was defined as the gloss B.

Based on the two hazes thus obtained, the gloss retention of the tape was calculated. The expression for determining the gloss retention was as follows: $Gloss retention \left(%\right) = \left(gloss B/gloss A\right) \times 100$

### <Storage elastic modulus at 23°C>

The storage elastic modulus at 23°C of the pressure-sensitive adhesive layer of the pressure-sensitive adhesive tape obtained in each of Examples and Comparative Examples was calculated by measuring a viscoelastic spectrum using a dynamic viscoelasticity measuring apparatus (product name "DVA-200" manufactured by IT Measurement Control Co., Ltd.) under conditions: shear mode: 10 Hz, amount of distortion: 0.1%, temperature range: -100°C to 100°C, and temperature elevation rate: 10°C/min.

### <Adhesive force>

### 1. Preparation of sample

The pressure-sensitive adhesive tape obtained in each of Examples and Comparative Examples was cut into a size of a width of 25 mm and a length of 100 mm, and the cut tape was attached to a SUS plate (50 mm in width and 125 mm in length) through a pressure-sensitive adhesive layer to obtain a measurement sample. The pressure-sensitive adhesive tape was attached to the SUS plate by moving a 2-kg roller back and forth twice at a speed of 10 ± 0.5 mm/s.

The measurement sample thus prepared was used to conduct the accelerated weather resistance test in accordance with Cycle A in JIS K5600-7-7. The test was conducted for 500 hours. Then, the measurement sample after the accelerated weather resistance test was measured for the adhesive force.

### 2. Measurement method

The adhesive force was measured as follows using the measurement samples before and after the test.

Each of the measurement samples was fixed to the chucks of a tensile tester ("TENSILON Universal Material Testing Instrument", manufactured by A&D Company, Limited). Thereafter, the pressure-sensitive adhesive tape was pulled over 60 mm or more at a peeling angle of 90° and a rate of 300 mm/min under an environment of 23°C and 50 RH%, and an average value of loads (N) detected over that interval by the load cell was recorded, which was taken as the adhesive force.

### <Total light transmittance (initial, after accelerated weather resistance test)>

The pressure-sensitive adhesive tape obtained in each of Examples and Comparative Examples was cut into a size of a width of 50 mm and a length of 30 mm to obtain a measurement sample, and the total light transmittance (initial total light transmittance) was measured.

Besides, a measurement sample separately similarly prepared was used to conduct the accelerated weather resistance test in accordance with Cycle A in JIS K5600-7-7. The test was conducted for 500 hours. Then, the measurement sample after the accelerated weather resistance test was measured for the total light transmittance (total light transmittance after the test). Total light transmittance was measured in accordance with JIS K7361-1. Specifically, the measurement was performed using a haze meter (Haze Meter NDH4000, manufactured by Nippon Denshoku Industries Co., Ltd.) under an atmosphere of 23°C and 50% humidity.

### <Difference between tensile loads of pressure-sensitive adhesive tape>

The pressure-sensitive adhesive tape obtained in each of Examples and Comparative Examples was used as a measurement sample to measure, with a tensile tester, each of the tensile load at 2.5% pulling and the tensile load at 0.5% pulling, and the difference between these tensile loads was calculated. Each of the measurements was conducted both in the MD and TD, and the difference between the tensile load at 2.5% pulling of the pressure-sensitive adhesive tape and the tensile load at 0.5% pulling of the pressure-sensitive adhesive tape was calculated for each direction. Of the differences between the tensile loads in the MD and the TD, the larger value was used as the difference between tensile loads.

### <Tensile elongation at break>

The pressure-sensitive adhesive tape obtained in each of Examples and Comparative Examples was subjected to a tensile test in both directions of the MD and the TD using a tensile tester ("TENSILON Universal Material Testing Instrument, manufactured by A&D Company, Limited), and the tensile elongation at break was calculated by the following expression. $Tensile elongation at break \left(%\right) = \left(L-{L}_{0}\right) / {L}_{0} \times 100$

Wherein L is the length of the specimen at break, and L₀ is the length of the specimen before the tensile test. The measured value of either the substrate or the pressure-sensitive adhesive layer, whichever broke first, was adopted as the tensile elongation at break. Of the adopted tensile elongations at break in the MD and the TD, the smaller value was defined as the tensile elongation at break of the pressure-sensitive adhesive tape.

The conditions in measuring the tensile load and measuring the tensile elongation at break were as follows. Both the tensile tests described above were conducted under an atmosphere of 23°C and 50 RH%.
Dimensions and shape of the substrate: strip shape of 24 mm in width × 80 mm in length
Distance between chucks: 50 mm
Tensile rate: 300 mm/min

### <Formation of rust>

The pressure-sensitive adhesive tape obtained in each of Examples and Comparative Examples was attached to a grit-blasted steel plate (150 × 70 × 3.2 mm) with a surface preparation degree of ISO 8501-1 Sa2.5, and subjected to an accelerated weather resistance test in accordance with Cycle A of JIS K5600-7-7. Subsequently, the presence or absence of formation of rust in the area where the pressure-sensitive adhesive tape had been attached was visually inspected to evaluate formation of rust. The test was conducted for 500 hours.

The evaluation criteria for the formation of rust were as follows:
Not formed: No visible rust was formed.
Formed: Visible rust was formed.

### <Substrate visibility>

An "X" mark was drawn with a marker on the pressure-sensitive adhesive layer of the pressure-sensitive adhesive tape obtained in each of Examples and Comparative Examples, and the resultant was then attached to a grit-blasted steel plate (150 × 70 × 3.2 mm) of ISO 8501-1 Sa2.5, and an accelerated weather resistance test was conducted in accordance with Cycle A in JIS K5600-7-7. After the test, the pressure-sensitive adhesive tape was visually inspected from the substrate side to evaluate the visibility of the underlying substrate. It should be noted that prior to the test, the "X" mark was fully visible through the substrate. The test was conducted for 500 hours.

The evaluation criteria for substrate visibility were as follows:
Good: The "X" mark was visible after the accelerated weather resistance test.
Poor: Either the "X" mark was invisible after the accelerated weather resistance test, or the evaluation result of rust formation was "Formed."

### <Total evaluation of weather resistance>

A total evaluation of weather resistance was performed based on the results of the evaluations, performed after the accelerated weather resistance test in accordance with Cycle A in JIS K5600-7-7, of the rust formation in the area where the pressure-sensitive adhesive tape had been attached, and the substrate visibility. The evaluation criteria for the total evaluation were as follows:
Good: No visible rust was formed, and the evaluation result of the substrate visibility was "Good".
Poor: Visible rust was formed, or the evaluation result of the substrate visibility assessment was "Poor".

### <Practical evaluation on projection conformability>

The conformability was evaluated by a procedure shown in 1 to 4 below.
1. As shown in Fig. 3, a pressure-sensitive adhesive tape 10, before the accelerated weather resistance test in accordance with Cycle A in JIS K5600-7-7, was attached to an adherend 20A of an L-shaped SUS plate 20 such that the height h and the width t of the bridged portion each were 2 mm.
2. A squeegee was pressed onto a portion in the pressure-sensitive adhesive tape 10 not adhered to the L-shaped SUS plate 20.
3. After the pressing in 2 above, the height h of the bridged portion was measured, and additionally, the presence or absence of occurrence of a tear in the pressure-sensitive adhesive tape 10 was visually checked.
4. Based on the measurement of the height h obtained in 3 above, the conformability of the pressure-sensitive adhesive tape 10 was evaluated in accordance with the following criteria.

Excellent: The height h was 0 mm, and no tear occurred in the pressure-sensitive adhesive tape 10.

Good: A tear occurred in the pressure-sensitive adhesive tape 10, but the height h was less than 2 mm. Alternatively, the height h was 2 mm, but the pressure-sensitive adhesive tape 10 had no tear and exhibited a certain degree of conformability.

Poor: The height h was 2 mm, and the pressure-sensitive adhesive tape 10 had a tear and exhibited no conformability to the SUS plate.

### <Practical evaluation on separation>

The pressure-sensitive adhesive tape of each of Examples and Comparative Examples (25 mm in width and 100 mm in length) was attached to an SUS plate (50 mm in width and 125 mm in length) and aged at 23°C for three days to prepare a specimen for separation evaluation. Water was injected for five minutes under conditions of water pressure of 8 MPa, from an injection position diagonally upward of the pressure-sensitive adhesive tape in the specimen for separation evaluation toward the side of a longitudinal end of the pressure-sensitive adhesive tape. The position from which water was injected (injection position) used was a position at which the angle between the line connecting the injection position to the center of the pressure-sensitive adhesive tape end and the SUS plate was 30°, the position being immediately above a point 5 cm distant in the horizontal direction from the center of the pressure-sensitive adhesive tape end.

The distance separated of the pressure-sensitive adhesive tape after water injection was measured and evaluated in accordance with the following criteria.

Excellent: The distance separated was 0 mm or more and less than 15 mm.

Good: The distance separated was 15 mm or more and less than 20 mm.

Poor: The distance separated was 20 mm or more.

### <Topcoat adhesiveness>

A fluorine-based topcoat paint (product name "V-Fron #100H Smile Topcoat IG", manufactured by Dai Nippon Toryo Co., Ltd.) in accordance with JIS K5659:2018 was applied such that the dry film thickness was 25 µm, and dried at 23°C for 16 hours to obtain a measurement sample. The measurement sample was subjected to a cross-cut test in accordance with JIS K5600-5-6 to evaluate topcoat adhesiveness, and the number of peeled grid squares was recorded.

In the cross-cut test, the dimension of each grid square was 2 mm × 2 mm, and the number of grid squares was 25.

### <Evaluation of topcoat>

A rolled steel plate for general structures (SS400) with a size of 70 mm in length × 150 mm in width was prepared. As illustrated in Fig. 4, the pressure-sensitive adhesive tape (60 mm in width and 140 mm in length) 10 of each of Examples and Comparative Examples was attached to the rolled steel plate 30. The steel plate 30, with the pressure-sensitive adhesive tape 10 attached thereto, was then coated with a topcoat paint (product name "V-Fron #100H Smile Topcoat", manufactured by Dai Nippon Toryo Co., Ltd.) 40 with a brush. After the topcoat paint 40 applied to the steel plate 30 was dried for 24 hours, the occurrence of wrinkling on the pressure-sensitive adhesive tape 10 was visually observed.

Good: No wrinkling occurred in the pressure-sensitive adhesive tape, and two or less grid squares were peeled in the aforementioned cross-cut test.

Poor: Wrinkling occurred in the pressure-sensitive adhesive tape, or more than two grid squares were peeled in the cross-cut test.

### [Materials used]

In Examples and Comparative Examples, the following materials were used.

### <Pressure-sensitive adhesive layer>

2-Ethylhexyl acrylate
n-Butyl acrylate
Acrylic acid
ACMO: acryloyl morpholine
Olefin polymer: product name "L-1253", manufactured by KURARAY CO., LTD., hydrogenated polybutadiene having a (meth)acryloyl group at one end.
Tackifier resin 1: product name "ARKON P140", manufactured by Arakawa Chemical Industries, Ltd., hydrogenated petroleum resin, softening point 140°C
Tackifier resin 2: product name "ARKON P100", manufactured by Arakawa Chemical Industries, Ltd., hydrogenated petroleum resin, softening point 100°C
Fine particle: product name "Cel-star Z-27", manufactured by Tokai Kogyo, K.K., glass balloon
Metal having lower potential than that of iron: Zinc particle, product name "Zinc powder #40", manufactured by SAKAI CHEMICAL INDUSTRY CO., LTD., average particle size 50 µm
Electro-conductive material: Carbon nanotube (CNT), product name "JENOTUBE 8A", manufactured by JEIO, average diameter 6 to 9 nm, average length 100 to 200 µm
Dispersant: product name "S-LEC BX-L", manufactured by SEKISUI CHEMICAL CO., LTD., polyvinyl butyral resin
Crosslinking agent: product name "TEAI-1000", manufactured by Nippon Soda Co., Ltd.
Polymerization initiator: 2,2-dimethoxy-2-phenylacetophenone
Acrylic pressure-sensitive adhesive/main agent: product name "Oribain BPS6080TFK", manufactured by Toyochem Co., Ltd.
Acrylic pressure-sensitive adhesive/curing agent: product name "BHS8515", manufactured by Toyochem Co., Ltd.
Pressure-sensitive adhesive tape: product name "VHB Y-4910J", manufactured by 3M

### <Film>

Soft acrylic resin film 1: product name "Soft Acrylic Sheet", manufactured by Tatsuta Chemical Co., Ltd.
Soft acrylic resin film 2: product name "AC-090CL", manufactured by Lonseal Corporation
Soft acrylic resin film 3: product name "AC-340CL", manufactured by Lonseal Corporation
Fluororesin film: product name "50NS", manufactured by AGC Inc.
Polyvinyl chloride resin film: product name "00C040M", manufactured by Nippon Carbide Industries Co., Inc.
Acrylic resin film: product name "ACRYPLEN MBS121E", manufactured by Mitsubishi Chemical Corporation
Acrylic resin film: product name "ACRYPLEN HTXD37", manufactured by Mitsubishi Chemical Corporation
Acrylic resin film: product name "ACRYPLEN HTXB16", manufactured by Mitsubishi Chemical Corporation
Acrylic resin film: product name "ACRYPLEN HBS029E", manufactured by Mitsubishi Chemical Corporation
Polyolefin resin film (PO for agricultural use): product name "E-Star UV Cut", manufactured by MKV Advance Co., Ltd.
Acrylic silicone paint/main agent: product name "Nippe Fine glassy Si Clear, Glossy Paint Liquid", manufactured by Nippon Paint Co., Ltd.
Acrylic silicone paint/curing agent: product name "Nippe Fine glassy Si Clear, Curing agent", manufactured by Nippon Paint Co., Ltd.

### [Examples 1 to 12, Comparative Examples 1 to 4]

Pressure-sensitive adhesive compositions were prepared according to the formulations shown in Tables 1, 2 and 5. In Tables 1, 2, and 5, "parts" denotes "parts by mass". Purge with nitrogen gas was carried on the pressure-sensitive adhesive composition to remove dissolved oxygen. Next, a spacer having the same thickness as a pressure-sensitive adhesive layer was placed on a release-treated surface of a release sheet, and the pressure-sensitive adhesive composition was applied onto the release-treated surface of the release sheet. Subsequently, the applied pressure-sensitive adhesive composition was covered with another release sheet such that its release-treated surface came into contact with the pressure-sensitive adhesive composition. As the release sheets, silicone release-treated PET films (50 µm in thickness) were used.

In this state, the intensity of a chemical lamp was adjusted such that the ultraviolet irradiation intensity at the release sheet on the covering side was 5 mW/cm², and ultraviolet rays were then irradiated from one side for 15 minutes. Thus, a pressure-sensitive adhesive layer consisting singly of the pressure-sensitive adhesive layer, with release sheets attached to both sides, was obtained.

Then, after removing one of the release sheets, the pressure-sensitive adhesive layer obtained by the aforementioned method was attached to each film (substrate) shown in Table 1, 2, and 5 to obtain a pressure-sensitive adhesive tape. The remaining release sheet was also removed from the pressure-sensitive adhesive tape before performing the measurement of various physical properties or the evaluations.

### [Examples 13 to 15]

Pressure-sensitive adhesive compositions were prepared according to the formulations shown in Table 3. In Table 3, "parts" denotes "parts by mass". Next, each pressure-sensitive adhesive composition was applied onto a release-treated surface of a release sheet with an applicator adjusted to a desired thickness. In this state, the resultant sheet was placed in an oven at 75°C and heated for 5 minutes. Subsequently, another release sheet was laminated such that its release-treated surface came into contact with the pressure-sensitive adhesive composition, and the resultant was aged at 23°C for 7 days to obtain a pressure-sensitive adhesive layer consisting singly of the pressure-sensitive adhesive layer, with release sheets attached to both sides. Silicone release-treated PET films (50 µm in thickness) were used as the release sheets.

Regarding a film (substrate), a coating liquid prepared according to the formulation shown in Table 3 was applied onto a release-treated surface of a release sheet with an applicator adjusted to the desired thickness. In this state, the resultant sheet was placed in an oven at 75°C and heated for 30 minutes. Subsequently, another release sheet was laminated such that its release-treated surface came into contact with the pressure-sensitive adhesive composition, and the resultant was aged at 23°C for 7 days to obtain the film having release sheets attached to its both sides.

Then, after removing one of the release sheets from each of the pressure-sensitive adhesive layer and the film (substrate), the exposed surfaces from which the release sheets had been removed were adhered together to obtain a pressure-sensitive adhesive tape. The remaining release sheets on both sides of the pressure-sensitive adhesive tape were also removed before performing the measurement of various physical properties or the evaluations.

### [Examples 16 and 17]

Instead of preparing a pressure-sensitive adhesive composition, a commercially available pressure-sensitive adhesive tape ("VHB Y-4910J") was used, and a film (substrate) shown in Table 4 was adhered onto one of the pressure-sensitive adhesive layers of the pressure-sensitive adhesive tape to obtain a pressure-sensitive adhesive tape.

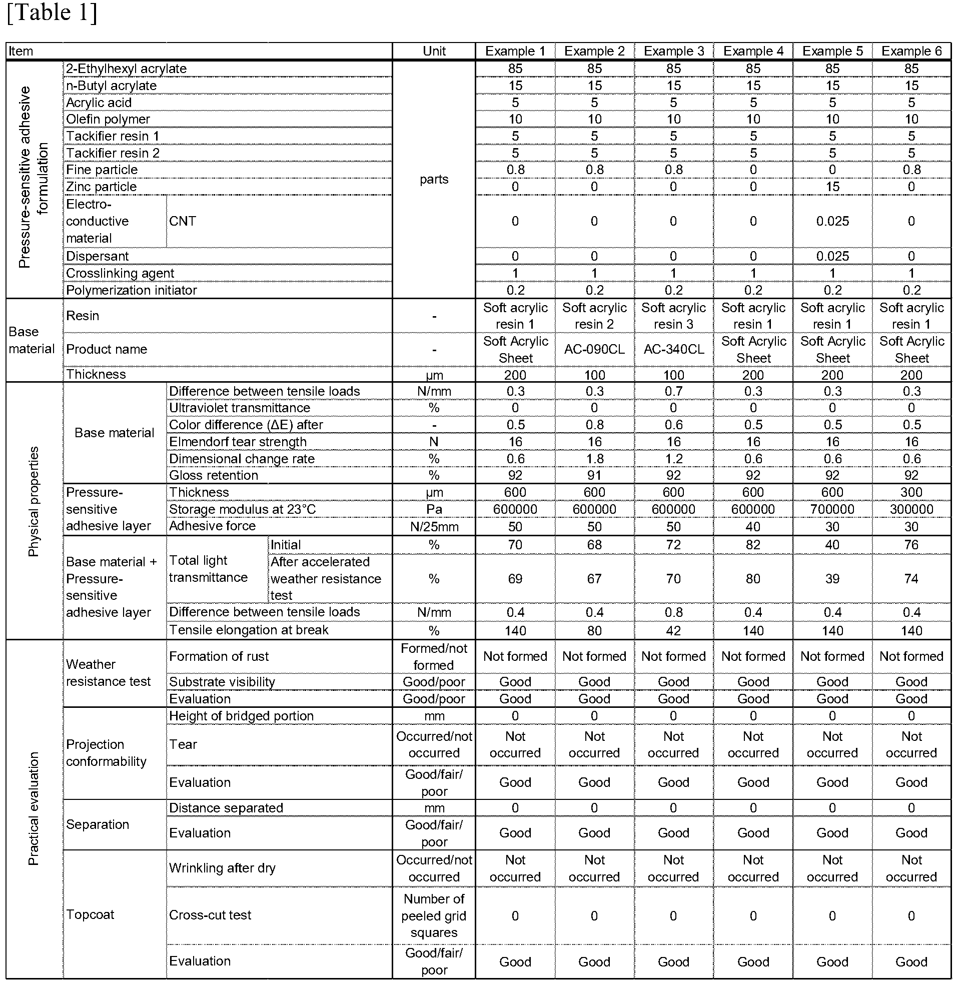

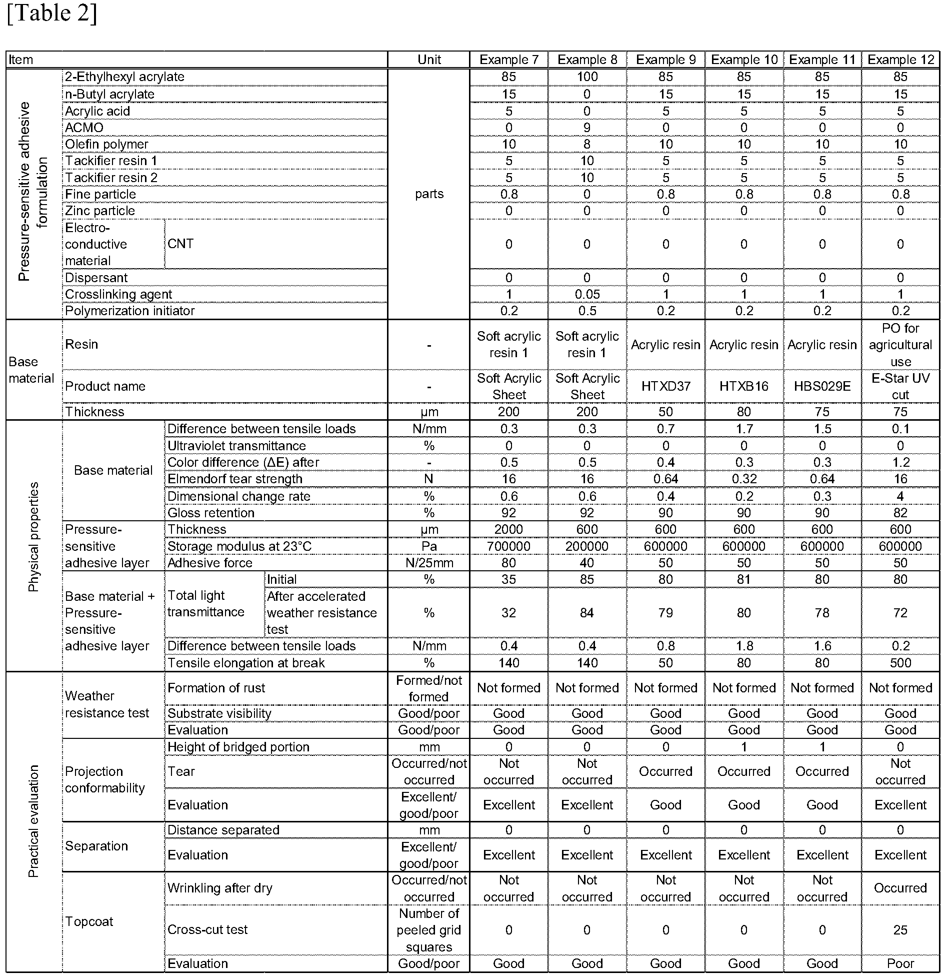

**[Table 3]**

| Item | | | | Unit | Example 13 | Example 14 | Example 15 |
|---|---|---|---|---|---|---|---|
| Pressure-sensitive adhesive formulation | Pressure-sensitive acrylic adhesive/main agent | | | parts | 100 | 100 | 100 |
| | Pressure-sensitive acrylic adhesive/curing agent | | | | 2.5 | 2.5 | 2.5 |
| Base material | Resin | | | - | Acrylic silicone | Acrylic silicone | Acrylic silicone |
| | Formulation | Acrylic silicone paint/main agent | | parts | 100 | 100 | 100 |
| | | Acrylic silicone paint/curing agent | | | 25 | 25 | 25 |
| | Thickness | | | µm | 100 | 100 | 100 |
| Physical properties | Base material | Difference between tensile loads | | N/mm | 0.7 | 0.7 | 0.7 |
| | | Ultraviolet transmittance | | % | 0 | 0 | 0 |
| | | Color difference (ΔE) after accelerated weather resistance test | | - | 1.2 | 1.2 | 1.2 |
| | | Elmendorf tear strength | | N | 0.8 | 0.8 | 0.8 |
| | | Dimensional change rate | | % | 20 | 20 | 20 |
| | | Gloss retention | | % | 90 | 90 | 90 |
| | Pressure-sensitive adhesive layer | Thickness | | µm | 100 | 200 | 600 |
| | | Storage modulus at 23°C | | Pa | 80000 | 80000 | 80000 |
| | | Adhesive force | | N/25mm | 60 | 57 | 98 |
| | Base material + Pressure-sensitive adhesive layer | Total light transmittance | Initial | % | 84 | 83 | 75 |
| | | | After accelerated weather resistance test | % | 84 | 83 | 75 |
| | | Difference between tensile loads | | N/mm | 0.3 | 0.2 | 0.1 |
| | | Tensile elongation at break | | % | 32 | 60 | 45 |
| Practical evaluation | Weather resistance test | Formation of rust | | Formed/not formed | Not formed | Not formed | Not formed |
| | | Substrate visibility | | Good/poor | Good | Good | Good |
| | | Evaluation | | Good/poor | Good | Good | Good |
| | Projection conformability | Height of bridged portion | | mm | 0 | 0 | 0 |
| | | Tear | | Occurred/not occurred | Occurred | Occurred | Occurred |
| | | Evaluation | | Excellent/ good/poor | Good | Good | Good |
| | Separation | Distance separated | | mm | 0 | 0 | 0 |
| | | Evaluation | | Excellent/ good/poor | Excellent | Excellent | Excellent |
| | Topcoat | Wrinkling after dry | | Occurred/not occurred | Occurred | Occurred | Occurred |
| | | Cross-cut test | | Number of peeled grid squares | 5 | 5 | 5 |
| | | Evaluation | | Good/poor | Poor | Poor | Poor |

**[Table 4]**

| Item | | | | Unit | Example 16 | Example 17 |
|---|---|---|---|---|---|---|
| Pressure-sensitive adhesive tape | Product name | | | - | VHB Y-4910J | VHB Y-4910J |
| | Thickness | | | mm | 1 | 1 |
| Base material | Resin | | | - | Soft acrylic resin 1 | PO for agricultural use |
| | Product name | | | - | Soft Acrylic Sheet | E-Star UV cut |
| | Thickness | | | µm | 200 | 75 |
| Physical properties | Base material | Difference between tensile loads | | N/mm | 0.3 | 0.1 |
| | | Ultraviolet transmittance | | % | 0 | 0 |
| | | Color difference (ΔE) after accelerated weather resistance test | | - | 0.5 | 1.2 |
| | | Elmendorf tear strength | | N | 16 | 16 |
| | | Dimensional change rate | | % | 0.6 | 4 |
| | | Gloss retention | | % | 92 | 82 |
| | Pressure-sensitive adhesive layer | Thickness | | µm | 1000 | 1000 |
| | | Storage modulus at 23°C | | Pa | - | - |
| | | Adhesive force | | N/25mm | 70 | 70 |
| | Base material + Pressure-sensitive adhesive layer | Total light transmittance | Initial | % | 90 | 86 |
| | | | After accelerated weather resistance test | % | 88 | 85 |
| | | Difference between tensile loads | | N/mm | 0.4 | 0.2 |
| | | Tensile elongation at break | | % | 140 | 500 |
| Practical evaluation | Weather resistance test | Formation of rust | | Formed/not formed | Not formed | Not formed |
| | | Substrate visibility | | Good/poor | Good | Good |
| | | Evaluation | | Good/poor | Good | Good |
| | Projection conformability | Height of bridged portion | | mm | 0 | 0 |
| | | Tear | | Occurred/not occurred | Not occurred | Not occurred |
| | | Evaluation | | Excellent/ good/poor | Excellent | Excellent |
| | Separation | Distance separated | | mm | 0 | 0 |
| | | Evaluation | | Excellent/ good/poor | Excellent | Excellent |
| | Topcoat | Wrinkling after dry | | Occurred/not occurred | Not occurred | Not occurred |
| | | Cross-cut test | | Number of peeled grid squares | 0 | 0 |
| | | Evaluation | | Good/poor | Good | Good |

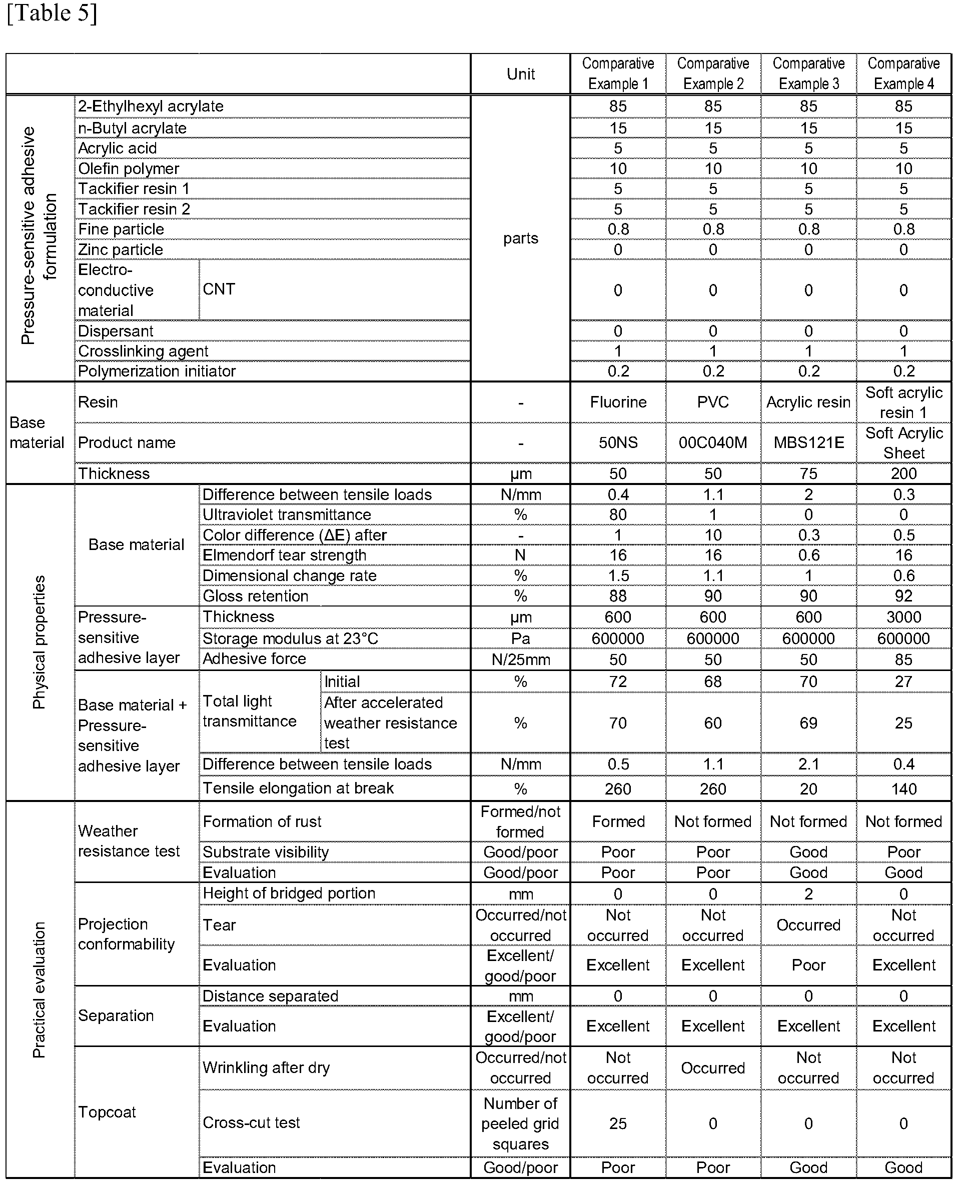

* In each of Examples and Comparative Examples, the substrate did not break during the measurement in the adhesive force test.

As is obvious from Examples described above, the pressure-sensitive adhesive tapes satisfying the requirements of the present invention were excellent in conformability and transparency, exhibited high weather resistance, and was resistant to degradation and discoloration even through long-term outdoor use, whereby excellent anticorrosive property and transparency could be maintained.

In contrast, the pressure-sensitive adhesive tape prepared in Comparative Example 1 exhibited high ultraviolet transmittance of the substrate after the accelerated weather resistance test, resulting in low weather resistance. Rust was formed, after the test, in the area where the pressure-sensitive adhesive tape was attached, and thus, the anticorrosive property of the tape decreased. Furthermore, the pressure-sensitive adhesive tape prepared in Comparative Example 2 exhibited a large color difference (ΔE) of the substrate after the test, and therefore, the transparency significantly decreased, and the result of the substrate visibility was "Poor".

The pressure-sensitive adhesive tape prepared in Comparative Example 3 showed a large difference between tensile loads, resulting in poor conformability.

The pressure-sensitive adhesive tape prepared in Comparative Example 4 exhibited low total light transmittance both before and after the accelerated weather resistance test, resulting in poor transparency.

### Reference Signs List

10 pressure-sensitive adhesive tape
11 pressure-sensitive adhesive layer
11A surface of pressure-sensitive adhesive layer
11B first pressure-sensitive adhesive layer
11C second pressure-sensitive adhesive layer
12 substrate
13 intermediate layer
20 L-shaped SUS plate
20A face to be adhered
30 rolled steel plate for general structures
40 topcoat paint
h height
t width

## Claims

1. A pressure-sensitive adhesive tape for concrete, mortar, an underwater material, or a metallic material, comprising a substrate, and a pressure-sensitive adhesive layer provided on at least one side of the substrate,
the pressure-sensitive adhesive tape having a total light transmittance of 30% or more, and a difference between a tensile load at 2.5% elongation and a tensile load at 0.5% elongation of less than 2.0 N/mm, and
the substrate having an ultraviolet transmittance at a wavelength of 340 nm of 5% or less, and a color difference (ΔE) after conducting an accelerated weather resistance test for 500 hours of 5 or less.

2. The pressure-sensitive adhesive tape according to claim 1, wherein the pressure-sensitive adhesive tape has a tensile elongation at break of 100% or more.

3. The pressure-sensitive adhesive tape according to claim 1 or 2, wherein the total light transmittance of the pressure-sensitive adhesive tape after conducting an accelerated weather resistance test in accordance with Cycle A in JIS K5600-7-7 for 500 hours is 30% or more.

4. The pressure-sensitive adhesive tape according to claim 1 or 2, wherein the substrate does not break and the pressure-sensitive adhesive layer has an adhesive force of 20 N/25 mm or more in a peeling test performed after conducting an accelerated weather resistance test in accordance with Cycle A in JIS K5600-7-7 for 500 hours.

5. The pressure-sensitive adhesive tape according to claim 1 or 2, wherein the substrate has an Elmendorf tear strength measured without introducing a slit in an Elmendorf tear method in accordance with JIS K 7128-2 (1998) of 1.7 N or more.

6. The pressure-sensitive adhesive tape according to claim 1 or 2, wherein when a measurement sample prepared by applying a fluorine-based topcoat paint, in accordance with JIS K5659:2018, to the substrate to a thickness of 25 µm and drying the paint at 23°C for 16 hours is subjected to a cross-cut test in accordance with JIS K5600-5-6, no peeling occurs in any of grid squares.

7. The pressure-sensitive adhesive tape according to claim 1 or 2, wherein a dimensional change rate of the substrate after immersion in xylene for 5 minutes is 3% or less.

8. The pressure-sensitive adhesive tape according to claim 1 or 2, wherein a gloss retention of the substrate after conducting the accelerated weather resistance test for 500 hours is 80% or more.

9. The pressure-sensitive adhesive tape according to claim 1 or 2, wherein the substrate contains an acrylic resin.

10. The pressure-sensitive adhesive tape according to claim 1 or 2, wherein the substrate has a thickness of 20 to 300 µm.

11. The pressure-sensitive adhesive tape according to claim 1 or 2, wherein the pressure-sensitive adhesive layer has a thickness of 50 to 2500 µm.

12. The pressure-sensitive adhesive tape according to claim 1 or 2, wherein the pressure-sensitive adhesive layer is formed from a photocurable resin.

13. The pressure-sensitive adhesive tape according to claim 1 or 2, wherein the pressure-sensitive adhesive layer is formed from an acrylic pressure-sensitive adhesive.

14. The pressure-sensitive adhesive tape according to claim 1 or 2, wherein the pressure-sensitive adhesive layer has a storage elastic modulus at 23°C of 50000 to 1000000 Pa.

15. The pressure-sensitive adhesive tape according to claim 1 or 2, wherein the pressure-sensitive adhesive layer contains a metal having a lower potential than that of iron.

16. The pressure-sensitive adhesive tape according to claim 15, wherein the metal having a lower potential than that of iron is zinc.

17. The pressure-sensitive adhesive tape according to claim 1 or 2, wherein the pressure-sensitive adhesive layer contains an electroconductive material other than the metal having a lower potential than that of iron.

18. The pressure-sensitive adhesive tape according to claim 17, wherein the electroconductive material is a carbon nanotube.

19. A method for using a pressure-sensitive adhesive tape, comprising attaching the pressure-sensitive adhesive tape according to claim 1 or 2 to a surface of a concrete structure or a structure having a rusted part.

20. The method for using a pressure-sensitive adhesive tape according to claim 19, comprising applying a rust progression inhibitor or a primer to a surface for attaching the pressure-sensitive adhesive tape before attaching the pressure-sensitive adhesive tape.
